# EUROPEAN PATENT SPECIFICATION

(11) **EP 4 667 152 B1**
(45) Date of publication and mention of the grant of the patent: **07.10.2026**
(21) Application number: 25180802.8
(22) Date of filing: 04.06.2025
(51) Int. Cl.: B23Q 11/00, B23Q 11/10, G05B 19/042

(54) **NUMERICAL CONTROL DEVICE, CONTROL METHOD, CONTROL PROGRAM, AND STORAGE MEDIUM**
NUMERISCHE STEUERUNGSVORRICHTUNG, STEUERUNGSVERFAHREN, STEUERUNGSPROGRAMM UND SPEICHERMEDIUM
DISPOSITIF DE COMMANDE NUMÉRIQUE, PROCÉDÉ DE COMMANDE, PROGRAMME DE COMMANDE ET SUPPORT DE STOCKAGE

(30) Priority: 19.06.2024 JP 2024098548
(43) Date of publication of application: 24.12.2025
(73) Proprietor: Brother Kogyo Kabushiki Kaisha, Nagoya, Aichi 467-8561 (JP)
(72) Inventor: TANIKAWA, Toyoaki, Nagoya, 467-8562 (JP); IRIE, Takeshi, Nagoya, 467-8562 (JP)
(74) Representative: J A Kemp LLP

(56) References cited:
- JP-A- 2008 155 324
- US-A1- 2014 338 765
- US-A1- 2020 316 739
- US-A1- 2022 179 390

## Description

### BACKGROUND ART

A control device described in JP 2018-067346 A determines whether an NC program includes a block in which an operation portion such as a main shaft, a coolant is in a stand-by state during execution of the NC program. When the block causing the stand-by state is present, the control device shuts off or restricts a power source of an operation that is targeted to be in the stand-by state by the block, such as power supplied to a main shaft motor, a coolant pump. JP 2008 155324, US 2014/338765, US 2020/316739 and US 2022/179390 disclose various arrangements of machining tools.

### SUMMARY

In the control device described in JP 2018-067346 A, since the power is shut off or restricted only at the block causing the stand-by state, the supply of the coolant by the coolant pump may become excessive. In this case, power consumed by the coolant pump may not be appropriately reduced. Note that it is sufficient that chips generated by machining are discharged at the end of the machining. Thus, it is preferable to calculate a timing of the end of the machining based on a machining time period of a machine tool, and to supply the coolant from a time point preceding the calculated timing by a predetermined time period.

However, the machining time period of the machine tool may fluctuate depending on set operating conditions, even when commands of the NC program are the same. As a specific example of this type of case is, for example, when an override function that changes a speed is used. Thus, when the machining time period is used as a reference for controlling a drive time period of a spray mechanism that sprays a cutting fluid, the drive time period of the spray mechanism also fluctuates, in line with the machining time period that fluctuates in accordance with the operating conditions.

An object of the present disclosure is to provide a numerical control device, a control method, a control program, and a storage medium that contributes to appropriately executing drive control of a spray mechanism for a cutting fluid, even when a machining time period fluctuates.

A numerical control device according to a first aspect of the present disclosure is defined in appended claim 1.

According to the first aspect, the numerical control device extracts the machining time period from the matching machining information that matches the identification information of the machining program and the machining conditions, and specifies the specific time. When the specified specific time has been reached, the numerical control device drives the spray mechanism until the end of the machining operation. In this case, even when the machining time period of the same machining program fluctuates due to changes in the machining conditions, the numerical control device contributes to accurately extracting the machining time period of the machining program that is being executed from the matching machining information. Thus, the numerical control device appropriately contributes to executing drive control of the spray mechanism even when the machining time period fluctuates.

The numerical control device according to the first aspects may further execute a process including second drive processing. The second drive processing may intermittently drive the spray mechanism during execution of the machining operation by the machining execution control processing. In this case, the numerical control device contributes to reducing the power intended for spraying the cutting fluid, compared to a case in which the spray mechanism is continuously driven.

The numerical control device according to the first aspects may further execute processes including change determination processing, and third drive processing. The change determination processing may determine whether setting of the machining conditions has been received during the execution of the machining operation by the machining execution control processing. When it is determined by the change determination processing that the setting of the machining conditions has been received, the third drive processing may stop the intermittent driving of the spray mechanism by the second drive processing and continuously driving the spray mechanism. When the machining conditions are set during the execution of the machining operation, the machining time period having a high degree of accuracy cannot be extracted. In this type of case, the numerical control device stops the intermittent driving of the spray mechanism, and switches to the continuous driving. In this way, the numerical control device contributes to ensuring that the drive control of the spray mechanism is not executed based on the machining time period having a low degree of accuracy.

In the numerical control device according to the first aspects, the machining conditions may include one of an override, a program skip, a dry run, or a combination thereof. The numerical control device accurately contributes to extracting the machining time period of the machining program being executed, from the matching machining information, by extracting the machining time period from the matching machining information having the same machining conditions of one of the override, the program skip, the dry run, or a combination thereof and specifying the specific time. Thus, the numerical control device contributes to appropriately executing the drive control of the spray mechanism even when the machining time period fluctuates due to a change in the machining conditions including one of the override, the program skip, the dry run, or a combination thereof.

In the numerical control device according to the first aspects, when it is determined by the information determination processing that a plurality of the matching machining information is stored in the storage portion, the time period extraction processing may extract the shortest machining time period, of the machining time periods associated with each of the plurality of matching machining information. In this case, the numerical control device contributes to a sufficient drive time period of the spray mechanism.

In the numerical control device according to the first aspects, the second drive processing may repeatedly execute driving the spray mechanism for a first time period, and stopping the spray mechanism for a second time period subsequent to driving the spray mechanism for the first time period. The first predetermined time period may be shorter than the first time period. Depending on the machining program, a small quantity of chips is generated in a latter half of the machining operation. In this case, even when the first predetermined time period is shorter than the first time period, the numerical control device contributes to sufficiently washing away the chips by the cutting fluid. Thus, the numerical control device contributes to reducing the power intended for spraying the cutting fluid, while appropriately washing away the chips using the cutting fluid.

In the numerical control device according to the first aspects, the second drive processing may repeatedly execute driving the spray mechanism for a first time period, and stopping the spray mechanism for a second time period subsequent to driving the spray mechanism for the first time period. The first predetermined time period may be longer than the first time period. In this case, the numerical control device drives the spray mechanism before the end of the machining operation, for a time period longer than the driving of the spray mechanism of the first time period, at a time of the intermittent driving. In this case, the numerical control device contributes to more reliably washing away the chips up to a time at which the machining operation ends.

The numerical control device according to the first aspects may further execute a process including fourth drive processing. When it is determined by the information determination processing that the matching machining information is not stored in the storage portion, the fourth drive processing may continuously drive the spray mechanism during a period from a start to the end of the machining operation. When the matching machining time period is not stored in the storage portion, it is not possible to specify the specific time based on the machining time period. In this case, by continuously driving the spray mechanism, the numerical control device contributes to reliably washing away the chips.

In the numerical control device according to the first aspects, the second drive processing may repeatedly execute driving the spray mechanism for a first time period, and stopping the spray mechanism for a second time period subsequent to driving the spray mechanism for the first time period. The numerical control device may further execute processes including second determination processing and fifth drive processing. The second determination processing may determine whether a second predetermined time period is shorter than a predetermined reference time period. The second time period may be a time period up to the specific time from stopping the driving of the spray mechanism for a final time before the end of the machining operation by the second drive processing. When it is determined by the second determination processing that the second predetermined time period is shorter than the reference time period, the fifth drive processing may continuously drive the spray mechanism during a period from a start time of driving the spray mechanism during the first time period for a final time to the end time of the machining operation. By driving the spray mechanism continuously from the end time point of the intermittent driving to the end of the machining operation, the numerical control device contributes to preventing the spray mechanism from being stopped for a short time period at a timing of switching from the intermittent driving to the continuous driving and once more being driven. In this way, the numerical control device can reduce the power intended for spraying the cutting fluid.

A control method according to a second aspect of the present disclosure is defined in appended claim 10.

A control program according to a third aspect of the present disclosure is defined in appended claim 11.

A storage medium according to a fourth aspect of the present disclosure is defined in appended claim 12.

### BRIEF DESCRIPTION OF DRAWINGS

FIG. 1 is a perspective view of a machine tool 1 as viewed from the rear.
FIG. 2 is a front view of the machine tool 1.
FIG. 3 is a plan view of the machine tool 1.
FIG. 4 is a cross-sectional view as seen in the direction of arrows along a line I-I shown in FIG. 3.
FIG. 5 is a view showing a state of a tool T machining a workpiece W.
FIG. 6 is a block diagram showing an electrical configuration of a numerical control device 30 and the machine tool 1.
FIG. 7 is a diagram showing a historical data table.
FIG. 8 is a graph showing a first cleaning operation.
FIG. 9 is a graph showing a second cleaning operation.
FIG. 10A and FIG. 10B are graphs showing a third cleaning operation.
FIG. 11 is a flowchart of main processing.
FIG. 12 is a flowchart of the main processing and is a continuation of FIG. 11.
FIG. 13 is a flowchart of the main processing and is a continuation of FIG. 12.
FIG. 14 is a flowchart of the main processing and is a continuation of FIG. 13.

### DESCRIPTION

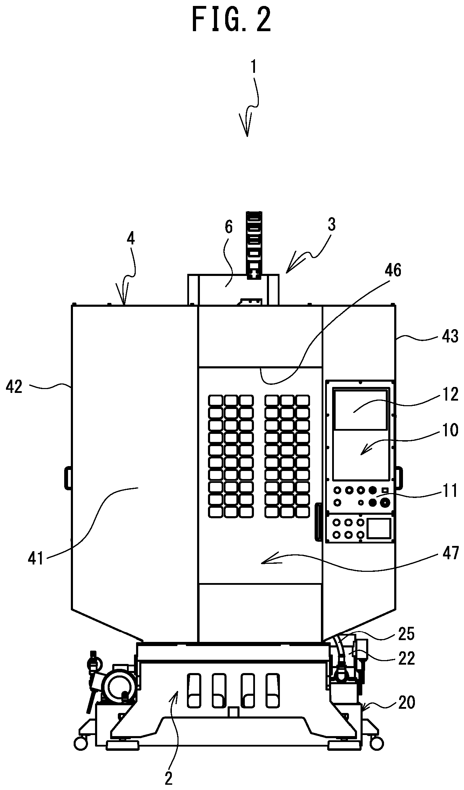

An embodiment of the present disclosure will be described with reference to the drawings. In the following description, a front direction, a depth direction, a left direction, a right direction, an upward direction, and a downward direction in FIG. 2 are a front direction, a rear direction, a left direction, a right direction, an upward direction, and a downward direction of a machine tool 1. A left-right direction, a front-rear direction, and an up-down direction of the machine tool 1 are, an X axis direction, a Y axis direction, and a Z axis direction of the machine tool 1.

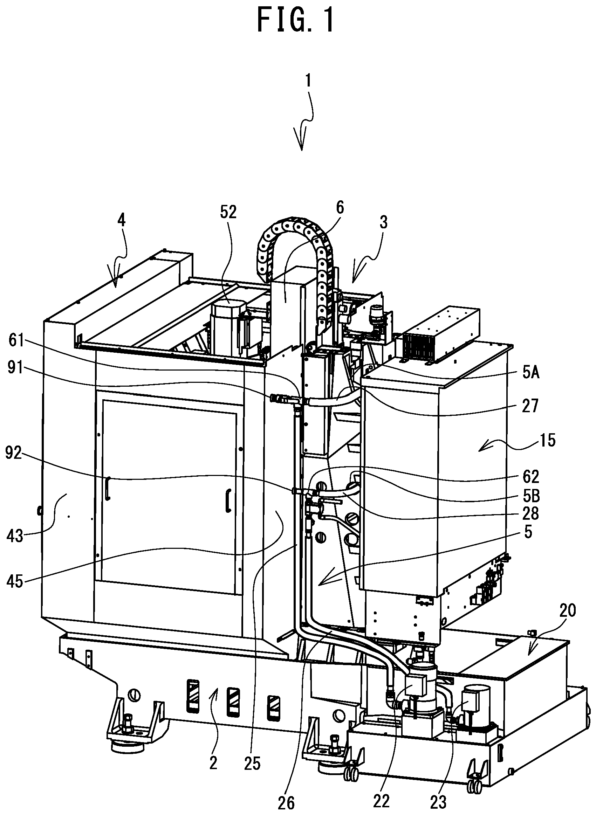

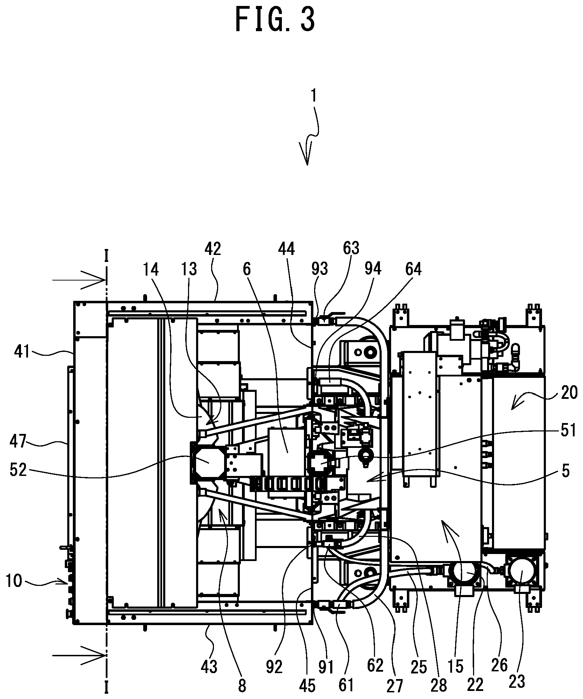

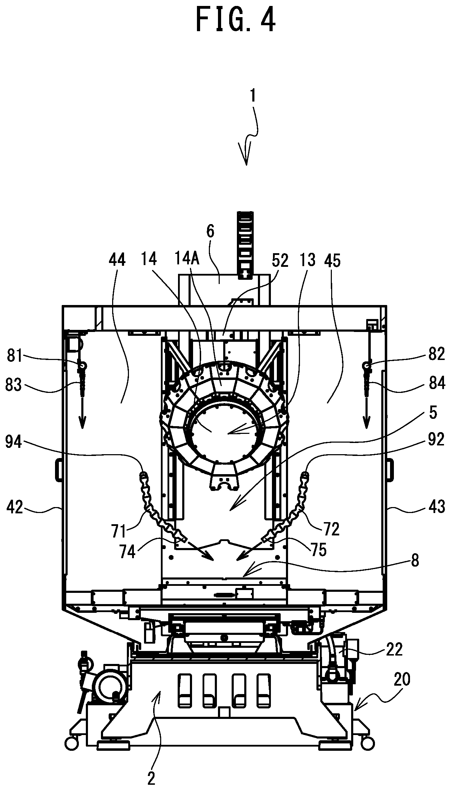

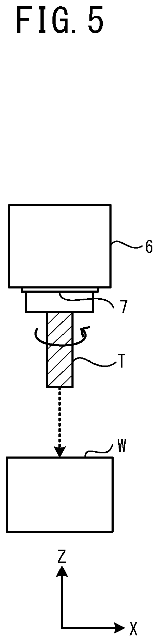

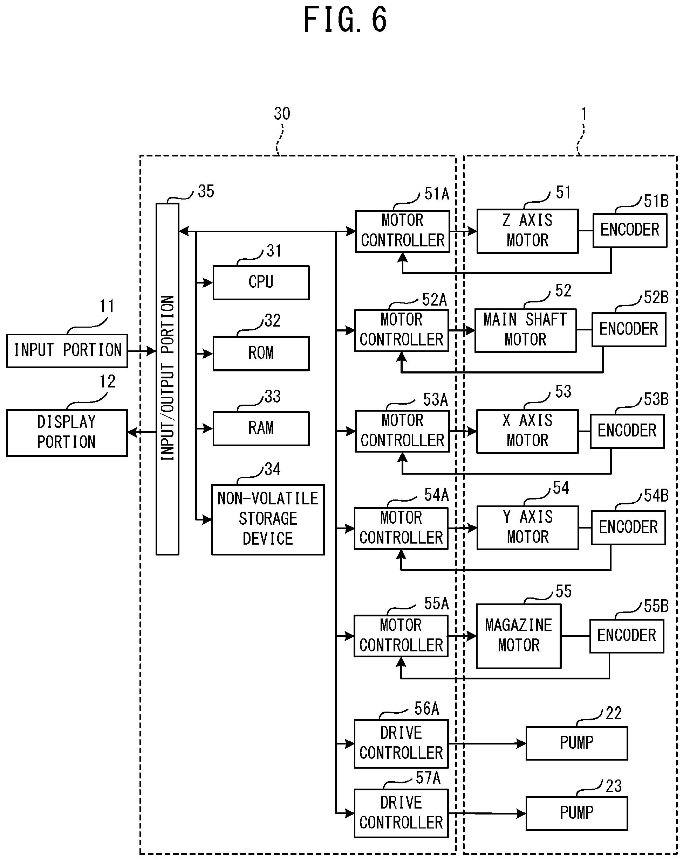

An overall structure of the machine tool 1 will be described with reference to FIG. 1 to FIG. 4. The machine tool 1 includes a base 2, a machine main body 3, a cover 4, a table 8 (refer to FIG. 3), a tool replacement device 13 (refer to FIG. 4), a control box 15. The base 2 has a substantially cuboid shape. The base 2 is a metal foundation. The machine main body 3 is located at an upper rear portion of the base 2. The machine main body 3 performs cutting processing on a workpiece W (refer to FIG. 5) held on an upper surface of the table 8. For example, types of the cutting processing include drilling, tapping, milling. The cover 4 is located at the upper portion of the base 2. The cover 4 has a substantially cuboid box shape. The cover 4 covers a periphery of the machine main body 3 and the upper portion of the base 2. The cover 4 prevents chips and droplets of cutting fluid from being dispersed to the outside. As shown in FIG. 4, the table 8 is located at the center of the upper portion of the base 2. The table 8 is moved in the X axis direction and the Y axis direction by an X axis motor 53 (refer to FIG. 6), a Y axis motor 54 (refer to FIG. 6), an X axis guide mechanism and a Y axis guide mechanism (not shown in the drawings). Each of the guide mechanisms includes a linear guide, a ball screw, a nut (none of which are shown in the drawings). The workpiece W (refer to FIG. 5) is fixed to the upper surface of the table 8 by a jig.

As shown in FIG. 4, the tool replacement device 13 includes a tool magazine 14. The tool magazine 14 is disk-shaped. The tool magazine 14 has a plurality of grip arms 14A around the outer periphery. The grip arms 14A grip a tool T (refer to FIG. 5) at tip end portions of the grip arms 14A, and pivot between the tool T and a main shaft 7 to be described later (refer to FIG. 5) of the machine main body 3. The tool replacement device 13 pivots the grip arms 14A that are at a tool replacement position, and attaches or removes the tool T mounted to the main shaft 7. The tool replacement position is a position of a lowermost portion of the tool magazine 14 and a position closest to the main shaft 7. As shown in FIG. 1, the control box 15 is located at a rear surface of the cover 4. The control box 15 internally houses a numerical control device 30 (refer to FIG. 6). The numerical control device 30 controls operations of the machine tool 1.

A configuration of the machine main body 3 will be described with reference to FIG. 1 to FIG. 4. The machine main body 3 includes a column 5, a main shaft head 6, the main shaft 7 (refer to FIG. 5). The column 5 is located at an upper rear portion of the base 2. The main shaft head 6 is raised and lowered in the Z axis direction along the front surface of the column 5, by a Z axis movement mechanism (not shown in the drawings). The Z axis movement mechanism includes a linear guide, a ball screw, a nut (none of which are shown in the drawings). As shown in FIG. 5, the main shaft head 6 rotatably supports the main shaft 7 inside the main shaft head 6. The tool T is mounted to a lower end portion of the main shaft 7. The main shaft 7 is rotated by driving of a main shaft motor 52 (refer to FIG. 3 and FIG. 6). The machine tool 1 carries out the cutting processing on the workpiece W, by moving the workpiece W (refer to FIG. 5) held on the upper surface of the table 8 and the tool T mounted to the main shaft 7.

A structure of the cover 4 will be described with reference to FIG. 1 to FIG. 4. The cover 4 includes a front wall 41, a left wall 42, a right wall 43, a left rear wall 44 (refer to FIG. 3 and FIG. 4), and a right rear wall 45 (refer to FIG. 3 and FIG. 4). The cover 4 is in a substantially cuboid box shape. Lower end portions of each of the walls 41 to 45 are fixed to the upper portion of the base 2. As shown in FIG. 3 and FIG. 4, the left rear wall 44 and the right rear wall 45 configure a rear wall of the cover 4. The left rear wall 44 is fixed to a front end portion on the left surface of the column 5, and extends to the left. The right rear wall 45 is fixed to a front end portion on the right surface of the column 5, and extends to the right. The cover 4 covers a machining region of the machine tool 1. The machining region is a region for the machine tool 1 to machine the workpiece W. The cover 4 includes a cutting fluid spray mechanism (hereinafter referred to as a "spray mechanism"). The spray mechanism sprays the cutting fluid inside the cover 4. Thus, the machine tool 1 washes away chips that are generated during the machining of the workpiece W and that become attached to and accumulate inside the cover 4. A structure of the spray mechanism will be described later.

As shown in FIG. 2, the front wall 41 includes an opening portion 46, an opening/closing door 47, and an operation panel 10. The opening portion 46 is located substantially at the center of the front wall 41. The opening portion 46 has a substantially square shape. The opening/closing door 47 moves in the left-right direction in the opening portion 46. An operator opens the opening/closing door 47, and attach or remove the workpiece W to or from the upper surface of the table 8. The operation panel 10 is located at the right of the opening portion 46. The operation panel 10 is connected to the numerical control device 30 (refer to FIG. 6) by a harness (not shown in the drawings). The operation panel 10 includes an input portion 11 and a display portion 12. Various operation commands of the machine tool 1, a machining program, the type of tool, a tool diameter, various parameters are input to the input portion 11. The machining program is an NC program configured by a plurality of blocks including various control commands, and includes block numbers. The numerical control device 30 controls the machine tool 1 on the basis of the machining program, and causes the machine tool 1 to execute machining operations, including shaft movement, tool replacement. The display portion 12 displays various input screens, operating screens in response to receiving commands of the numerical control device 30.

A structure of the spray mechanism will be described with reference to FIG. 1, FIG. 3, and FIG. 4. The spray mechanism is configured by a spray portion and a supply portion. The spray portion is located inside the cover 4. The spray portion sprays the cutting fluid inside the cover 4. The supply portion is located outside the cover 4. The supply portion supplies the cutting fluid to the spray portion.

A configuration of the spray portion will be described with reference to FIG. 4. The spray portion is configured by flexible pipes 71, 72, cutting fluid nozzles 74 and 75, cutting fluid pipes 81 and 82, tip showers 83 and 84. The flexible pipe 71 extends from a through hole 94 located in the left rear wall 44 toward the upper surface of the table 8. The through hole 94 is located at substantially a mid-level position, in the up-down direction, of a right end of the left rear wall 44. The cutting fluid nozzle 74 is located at a leading end of the flexible pipe 71. The flexible pipe 72 extends from a through hole 92 located in the right rear wall 45 toward the upper surface of the table 8. The through hole 92 is located at substantially a mid-level position, in the up-down direction, of a left end of the right rear wall 45. The cutting fluid nozzle 75 is located at a leading end of the flexible pipe 72. The cutting fluid nozzles 74 and 75 are oriented toward the upper surface of the table 8 by bending the flexible pipes 71 and 72.

The cutting fluid pipe 81 extends to the front and horizontally from a through hole 93 (refer to FIG. 3) located at a left end of an upper portion of the left rear wall 44. The cutting fluid pipe 82 extends to the front and horizontally from a through hole 91 (refer to FIG. 3) located at a right end of an upper portion of the right rear wall 45. A plurality of holes (not shown in the drawings) are located at predetermined intervals in a lower portion of the cutting fluid pilot pipe 81. The tip showers 83 are attached to the plurality of holes located at the lower portion of the cutting fluid pipe 81. A plurality of holes (not shown in the drawings) are located at predetermined intervals in a lower portion of the cutting fluid pilot pipe 82. The tip showers 84 are attached to the plurality of holes located at the lower portion of the cutting fluid pipe 82. The tip showers 83 and 84 direct a spray direction of the cutting fluid downward.

A configuration of the supply portion will be described with reference to FIG. 1 and FIG. 3. As shown in FIG. 1, the supply portion is configured by a tank 20, pumps 22 and 23, main hoses 25 and 26, branch hoses 27 and 28, T-shaped coupling joints 61 and 62, coupling joints 63 and 64 (refer to FIG. 3). The tank 20 is disposed at the rear of the base 2, and stores the cutting fluid. The pumps 22 and 23 are adjacent to the right of the tank 20. The main hose 25 is connected to the pump 22. The main hose 26 is connected to the pump 23. The pump 22 draws up the cutting fluid inside the tank 20, and supplies the cutting fluid to the main hose 25. The pump 23 draws up the cutting fluid inside the tank 20, and supplies the cutting fluid to the main hose 26.

The T-shaped joint 61 is connected, from outside the cover 4, to the through hole 91 located at the right end of the upper portion of the right rear wall 45. The T-shaped joint 62 is connected, from outside the cover 4, to the through hole 92 located at the left end and at the substantially mid-level position, in the up-down direction, of the right rear wall 45. As shown in FIG. 3, the joint 63 is connected, from the outside of the cover 4, to the through hole 93 located at the left end of the upper portion of the left rear wall 44. The joint 64 is connected, from outside the cover 4, to the through hole 94 (refer to FIG. 4) located at the right end and at the substantially mid-level position, in the up-down direction, of the left rear wall 44.

The T-shaped joint 61 is connected to the main hose 25 and the branch hose 27. The branch hose 27 extends to the left of the column 5 via a rear surface of the column 5, and is connected to the joint 63 located at the left rear wall 44 (refer to FIG. 3). The T-shaped joint 62 is connected to the main hose 26 and the branch hose 28. The branch hose 28 passes through a hole 5B (refer to FIG. 1) located in the column 5, extends to the left of the column 5, and is connected to the joint 64 located at the left rear wall 44 (refer to FIG. 3). The hole 5B is located at a substantially mid-level position in the up-down direction of the column 5, and extending through the column 5 in the left-right direction.

Operations of the spray mechanism will be described with reference to FIG. 1, FIG. 3, and FIG. 4. When the pump 23 is driven, the cutting fluid flows through the main hose 26. The cutting fluid is branched at the T-shaped joint 62. One part of the cutting fluid flows to the flexible pipe 72 via the through hole 92, and the other part of the cutting fluid flows to the branch hose 28. The cutting fluid that has flowed to the flexible pipe 72 is sprayed from the cutting fluid nozzle 75. The cutting fluid that has flowed to the branch hose 28 flows to the flexible pipe 71 via the through hole 94 from the joint 64 on the opposite of the column 5, and is sprayed from the cutting fluid nozzle 74. The cutting fluid nozzles 74 and 75 directly apply the cutting fluid, from both the left and right sides, to a machined portion (not shown in the drawings) of the workpiece W fixed by the jig to the upper surface of the table 8. The cutting fluid washes off chips that have attached to the machined portion.

When the pump 22 is driven, the cutting fluid flows through the main hose 25. The cutting fluid is branched at the T-shaped joint 61. One part of the cutting fluid flows to the cutting fluid pipe 82 via the through hole 91, and the other part of the cutting fluid flows to the branch hose 27. The cutting fluid that has flowed to the cutting fluid pipe 82 is sprayed downward from the tip showers 84. The cutting fluid that has flowed to the branch hose 27 flows through the cutting fluid pipe 81 via the through hole 93 from the joint 63 on the opposite of the column 5, and is sprayed downward from the tip showers 83. Thus, the cutting fluid washes off the chips that have become attached to and accumulated inside the cover 4.

Hereinafter, the operation of washing off the chips by spraying the cutting fluid from the tip showers 83 and 84 by driving the pump 22 of the spray mechanism will be referred to as a "cleaning operation".

An electrical configuration of the numerical control device 30 and the machine tool 1 will be described with reference to FIG. 6. The numerical control device 30 includes a CPU 31, a ROM 32, a RAM 33, a non-volatile storage device 34, an input/output portion 35, motor controllers 51A to 55A, drive controllers 56A and 57A. The CPU 31 performs overall control of the numerical control device 30. The ROM 32 stores a control program. The RAM 33 includes various storage areas to be described later. The non-volatile storage device 34 stores a plurality of machining programs. Note that the control program stored in the ROM 32 may also be stored in a readable external storage medium (for example a USB memory or a CD-ROM). The CPU 31 may read out the program from the storage medium and store the program in the non-volatile storage device 34, and may execute the control program stored in the non-volatile storage device 34. Alternatively, the machine tool 1 may be configured to be able to communicate with another apparatus (for example a server) via a communication line. The control program may be stored in a storage device of the other apparatus. The CPU 31 may store, in the non-volatile storage device 34, the control program that is acquired by performing communication with the other apparatus.

The motor controller 51A is connected to a Z axis motor 51 and an encoder 51B. The motor controller 52A is connected to the main shaft motor 52 and an encoder 52B. The motor controller 53A is connected to the X axis motor 53 and an encoder 53B. The motor controller 54A is connected to the Y axis motor 54 and an encoder 54B. The motor controller 55A is connected to a magazine motor 55 and an encoder 55B. The drive controller 56A is connected to the pump 22. The drive controller 57A is connected to the pump 23. The motor controllers 51A to 55A receive commands from the CPU 31 and output a drive current to the corresponding motors 51 to 55.

The motor controllers 51A to 55A receive feedback signals from the encoders 51B to 55B, and perform feedback control of a position and speed. The input/output portion 35 is connected to the input portion 11 and the display portion 12. The drive controllers 56A and 57A receive commands from the CPU 31, and output a drive current to the corresponding pumps 22 and 23. The pumps 22 and 23 are driven by the drive currents. Each of the Z axis motor 51, the main shaft motor 52, the X axis motor 53, the Y axis motor 54, and the magazine motor 55 is a servo motor. Note that, in the following description, when the Z axis motor 51, the main shaft motor 52, the X axis motor 53, the Y axis motor 54, and the magazine motor 55 are collectively referred to, they are referred to as the motors 51 to 55.

When starting the machining operation using the machine tool 1, the operator first perform an operation on the input portion 11 to select the machining program. Next, the operator performs an operation on the input portion 11 to set machining conditions. The machining conditions include a rapid traverse override, a cutting feed override, a main shaft override, a block skip, and a dry run. The rapid traverse override is a movement speed of the tool T with respect to the workpiece W when performing a rapid traverse operation, and is set by the operator in a range from 0 to 100%. The cutting feed override is a movement speed of the tool T with respect to the workpiece W during a cutting feed operation, and is set by the operator in a range from 0 to 100%. The main shaft override is a rotation speed of the main shaft 7, and is set by the operator in a range from 0 to 100%. The block skip is a setting to skip a predetermined block of the machining program. The predetermined block is prescribed by predetermined instructions included in the machining program. The dry run is a setting that moves the tool T with respect to the workpiece W at a speed set in the numerical control device 30 separately from the instructions of the machining program.

The CPU 31 of the numerical control device 30 controls the machine tool 1 under the set machining conditions, based on the selected machining program. In this way, the machining operation is executed by the machine tool 1.

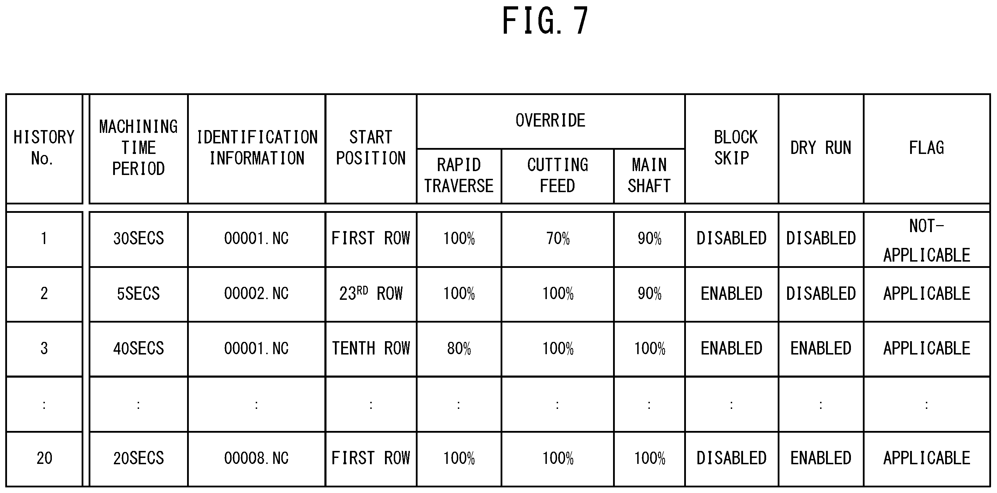

A historical data table will be described with reference to FIG. 7. The historical data table stores a plurality of reference machining information, as information indicating a history of the machining operations executed by the machine tool 1. A history No., a machining time period, identification information, a start position, the rapid traverse override, the cutting feed override, the main shaft override, the block skip, the dry run, and flag information are associated with each other in the reference machining information.

The history No. indicates an index of the reference machining information. The machining time period indicates an execution time period of the machining operation by the machine tool 1. The identification information is information identifying the selected machining program when causing the machine tool 1 to execute the machining operation. For example, the identification information is file name of the machining program. Note that the identification information is not limited to be the file name of the machining program, and may be other information with which the machining program can be identified. For example, the identification information may be a simple numerical character or symbol, a name of the creator of the machining program, or a factory name. The start position indicates a row number of an instruction, of a plurality of instructions included in the machining program, that is initially referred to when the machine tool 1 executes the machining operation.

The rapid traverse override, the cutting feed override, the main shaft override, the block skip, and the dry run indicate the machining conditions set when the machine tool 1 executes the machining operation based on the corresponding machining program. In the example shown in FIG. 7, a value of 0 to 100% set by the operator indicates the rapid traverse override, the cutting feed override, and the main shaft override. As the block skip and the dry run, "Enabled" is indicated when the operator has performed a setting to turn the function ON, and "Disabled" is indicated when the operator has performed a setting to turn the function OFF.

For the flag information, a not-applicable flag is set when the operator has set the machining conditions during the machining operation by the machine tool 1, and an applicable flag is set when the operator has not set the machining conditions during the machining operation.

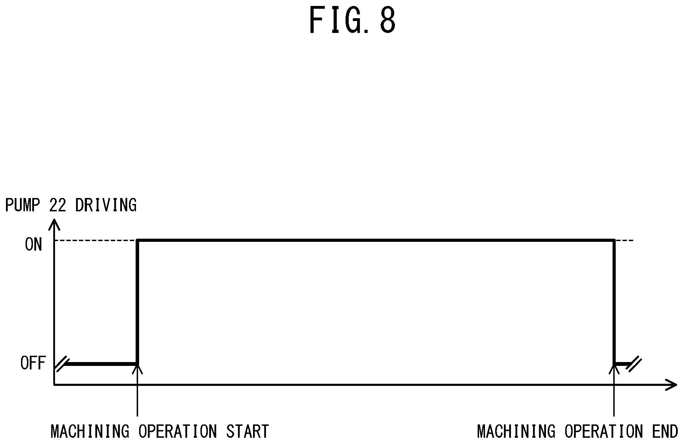

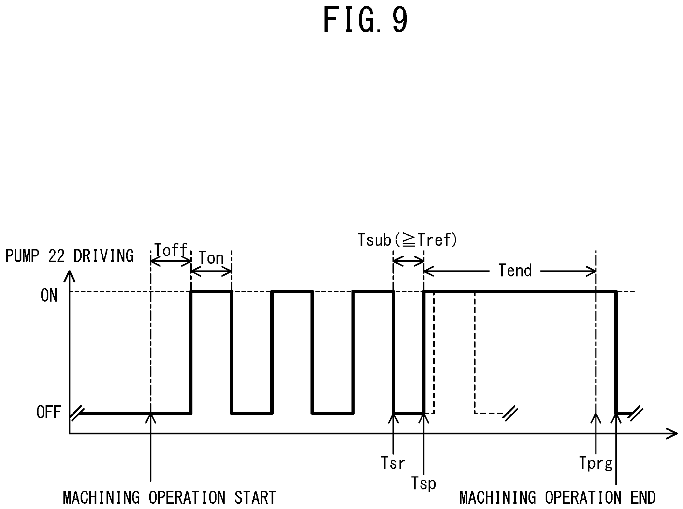

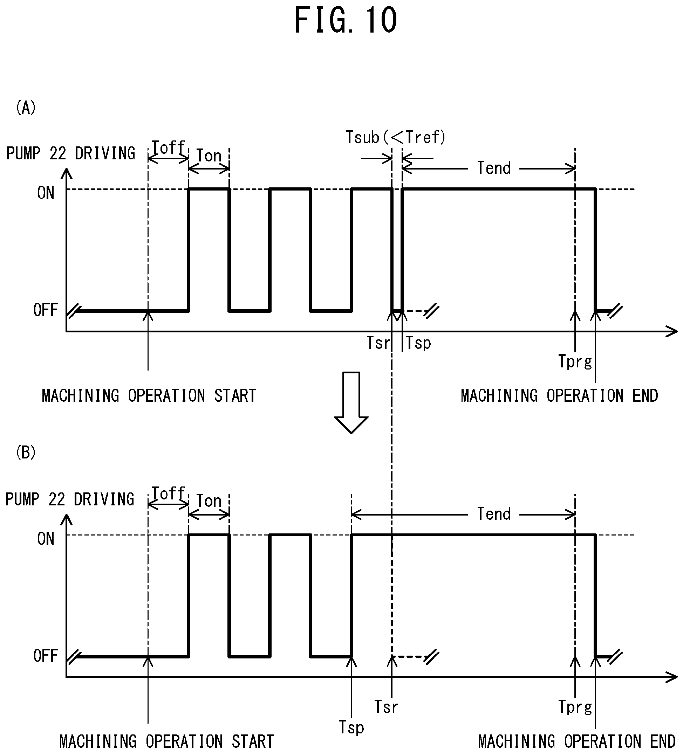

The cleaning operation will be described with reference to FIG. 8 to FIG.10B. The cleaning operation is executed during the machining operation of the machine tool 1. The CPU 31 of the numerical control device 30 switches a method of the cleaning operation, based on the machining program selected by the operator that causes the machine tool 1 to execute the machining operation, and on the machining conditions set by the operator to execute the machining operation. More specifically, when machining information that matches all of the identification information of the selected machining program, the start position, and the machining conditions are not stored in the historical data table (refer to FIG. 7), a first cleaning operation shown in FIG. 8 is executed. The machining information includes the identification information of the machining program, the start position, and the machining conditions. When the machining information that matches all of the identification information of the machining program, the start position, and the machining conditions is stored in the historical data table, a second cleaning operation shown in FIG. 9, or a third cleaning operation shown in FIGS. 10A and 10B is executed. Hereinafter, the machining information that matches all of the identification information of the machining program, the start position, and the machining conditions will be referred to as "matching machining information".

As shown in FIG. 8, in the first cleaning operation, the pump 22 is continuously driven during a period from the start to the end of the machining operation. In this way, the cutting fluid is continuously sprayed from the tip showers 83 and 84, and the chips that have become attached to and accumulated inside the cover 4 are washed away.

As shown in FIG. 9 and FIGS. 10A and 10B, in the second cleaning operation and the third cleaning operation, the pump 22 is intermittently operated during a period from the start of the machining operation to partway through the machining operation. More specifically, an operation is repeated of stopping the pump 22 for a second time period Toff and subsequently driving the pump 22 for a first time period Ton. In this way, the cutting fluid is intermittently sprayed from the tip showers 83 and 84, and the chips that have become attached to and accumulated inside the cover 4 are washed away. Hereinafter, a drive state in which the cutting fluid is intermittently sprayed from the tip showers 83 and 84 by intermittently driving the pump 22 will be referred to as an "intermittent drive state".

Further, the pump 22 is continuously driven during a period from partway through the machining operation (Tsp in FIG. 9) to the end of the machining operation. In this way, the cutting fluid is continuously sprayed from the tip showers 83 and 84, and the chips that have become attached to and accumulated inside the cover 4 are washed away. Hereinafter, a drive state in which the cutting fluid is continuously sprayed from the tip showers 83 and 84 by continuously driving the pump 22 will be referred to as a "continuous drive state".

A time period of the continuous drive state differs between the second cleaning operation shown in FIG. 9, and the third cleaning operation shown in FIGS. 10A and 10B. This will be described in more detail below. In FIG. 9 and FIGS. 10A and 10B, a time, from a start time point of the machining operation, at which the machining time period associated in the matching machining information has elapsed will be referred to as an "historical end time Tprg". A time period used as a reference for deciding the time period of the continuous drive state will be referred to as a "first predetermined time period Tend". A time preceding the historical end time Tprg by the first predetermined time period Tend will be referred to as a "specific time Tsp". When, in the intermittent drive state, the pump 22 is driven during the first time period Ton for a final time and is then stopped, a time at which the pump 22 is stopped will be referred to as an "end time Tsr". A time period from the end time Tsr to the specific time Tsp will be referred to as a "second predetermined time period Tsub". A predetermined time period used as a reference for determining the second predetermined time period Tsub will be referred to as a "reference time period Tref".

As shown in FIG. 9, the second cleaning operation is executed when the second predetermined time period Tsub is equal to or greater than the reference time period Tref. In this case, after driving the pump 22 during the first time period Ton for the final time in the intermittent drive state, the driving of the pump 22 is subsequently stopped at the end time Tsr. When the second predetermined time period Tsub has elapsed in the state in which the driving of the pump 22 is stopped, the specific time Tsp is reached. When the specific time Tsp is reached, the driving of the pump 22 is started, whereby the drive state becomes the continuous drive state. In the continuous drive state, when the first predetermined time period Tend has elapsed from the start of the driving of the pump 22, the historical end time Tprg is reached. The pump 22 is further continuously driven. Then, when the machining operation is ended, the driving of the pump 22 is also stopped.

As shown in FIG. 10A, the third cleaning operation is executed when the second predetermined time period Tsub is shorter than the reference time period Tref. In this case, as shown in FIG. 10B, the first predetermined time period Tend is re-set such that a start time of the first time period Ton in which the pump 22 is driven for the final time in the intermittent drive state matches the specific time Tsp. As a result, the pump 22 is continuously driven during a period from the start of the driving of the first time period Ton for the final time in the intermittent drive state to the end of the machining operation, whereby the drive state becomes the continuous drive state. Then, when the machining operation is ended, the driving of the pump 22 is also stopped. In this way, in the third cleaning operation, in contrast to the second cleaning operation, when the pump 22 is driven during the first time period Ton for the final time in the intermittent drive state, even after the end time Tsr is reached, the driving of the pump 22 is not stopped.

Here, in FIG. 9 and FIGS. 10A and 10B, the first predetermined time period Tend is longer than the first time period Ton. Thus, the cutting fluid is continuously sprayed in the continuous drive state during the first predetermined time period Tend that is longer than the first time period Ton in which the cutting fluid is repeatedly sprayed in the intermittent drive state.

Note that a magnitude relationship between the first predetermined time period Tend and the first time period Ton is not limited to the example shown in FIG. 9 and FIGS. 10A and 10B. For example, the first predetermined time period Tend may be shorter than the first time period Ton. In this case, the cutting fluid is continuously sprayed in the continuous drive state during the first predetermined time period Tend that is shorter than the first time period Ton in which the cutting fluid is repeatedly sprayed in the intermittent drive state.

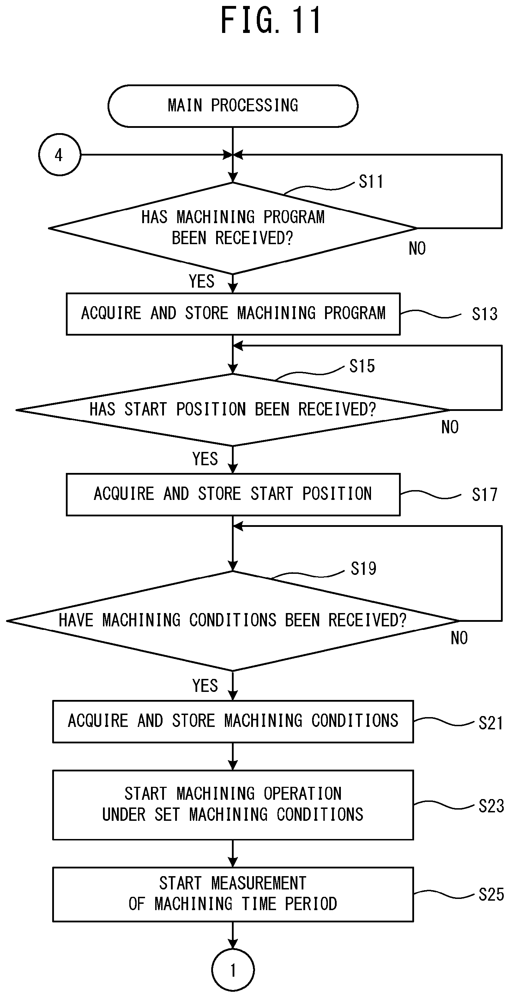

Main processing will be described with reference to FIG. 11 to FIG. 14. The main processing is started by the CPU 31 of the numerical control device 30 reading out and executing the control program stored in the non-volatile storage device 34. Specifically, the main processing is started when a power supply of the machine tool 1 is turned on.

As shown in FIG. 11, the CPU 31 determines whether an operation to select the machining program has been received via the input portion 11 (S11). When the CPU 31 determines that the operation to select the machining program has not been received (no at S11), the CPU 31 returns the processing to S11. The CPU 31 repeats the processing at S11 until the operation to select the machining program is received. When the CPU 31 determines that the operation to select the machining program has been received (yes at S11), the CPU 31 reads out the selected machining program from the ROM 32, and stores the selected machining program in the RAM 33 (S13).

The CPU 31 determines whether an operation to input the start position of the machining program has been received via the input portion 11 (S15). The start position is a block number included in the machining program, and a first row shown in FIG. 7 is equivalent to a block number 1, while a 23rd row is equivalent to a block number 23. When the CPU 31 determines that the operation to input the start position has not been received (no at S15), the CPU 31 returns the processing to S15. The CPU 31 repeats the processing at S15 until the input of the start position has been received. When the CPU 31 determines that the operation to input the start position has been received (yes at S15), the CPU 31 acquires the input start position and stores the input start position in the RAM 33 (S17).

The CPU 31 determines whether an operation to set the machining conditions (the rapid traverse override, the cutting feed override, the main shaft override, the block skip, and the dry run) has been received via the input portion 11 (S19). When the CPU 31 determines that the operation to set the machining conditions has not been received (no at S19), the CPU 31 returns the processing to S19. The CPU 31 repeats the processing at S19 until the operation to set the machining conditions is received. When the CPU 31 determines that the operation to set the machining conditions has been received (yes at S19), the CPU 31 stores the set machining conditions in the RAM 33 (S21).

The CPU 31 reads out, from the RAM 33, the machining program, the start position, and the machining conditions that are stored in the RAM 33. The CPU 31 acquires the plurality of instructions of the read out machining program, sequentially from the instruction of the read out start position. The CPU 31 drives the machine tool 1 using a drive method that accords with the acquired instructions. Note that the drive method of the machine tool 1 is adjusted such that the machining operation is executed in accordance with the read out machining conditions. In this way, the machining operation that uses the tool T to machine the workpiece W under the set machining conditions is started in the machine tool 1 (S23). The CPU 31 starts measurement of the machining time period of the machining operation that has been started (S25).

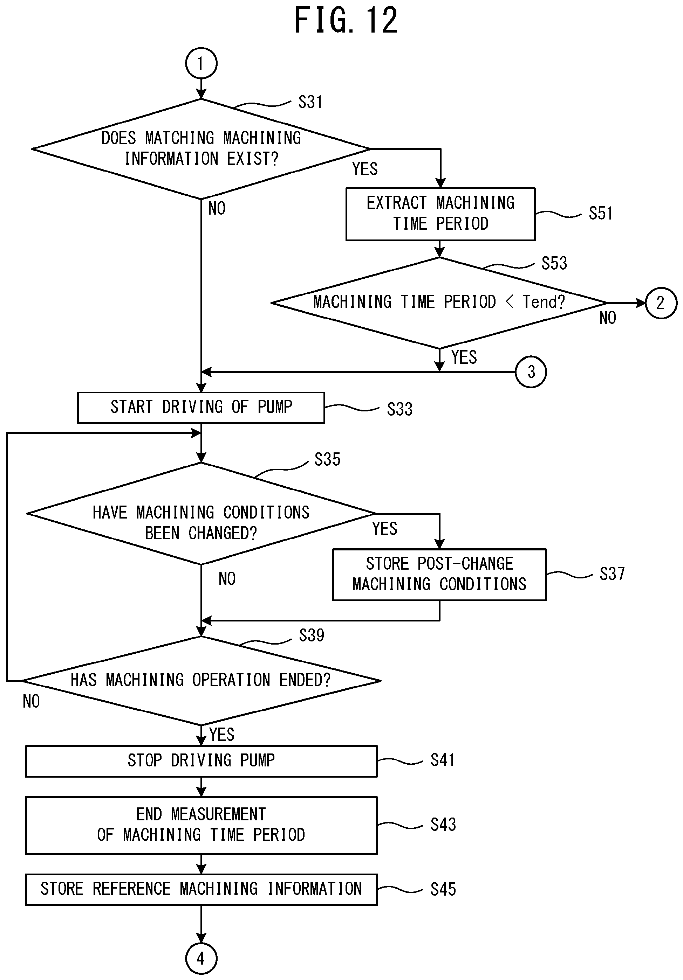

As shown in FIG. 12, the CPU 31 refers to the machining program, the start position, and the machining conditions stored in the RAM 33. The CPU 31 determines whether the matching machining information, which is the reference machining information including the identification information matching the identification information of the machining program selected at S11 (refer to FIG. 11), including the start position matching the start position specified at S15 (refer to FIG. 11), and including the machining conditions matching the machining conditions set at S19 (refer to FIG. 11), and is the matching machining information with which the applicable flag is associated, is stored in the historical data table (refer to FIG. 7) (S31). When the CPU 31 determines that the matching machining information is not stored in the historical data table (no at S31), the CPU 31 advances the processing to S33 in order to start the first cleaning operation (refer to FIG. 8).

The CPU 31 controls the drive controller 57A and starts the driving of the pump 22 (S33). In this case, the cutting fluid is sprayed from the tip showers 83 and 84, and the chips that have become attached to and accumulated inside the cover 4 are washed away.

The CPU 31 determines whether an operation to change the machining conditions has been received via the input portion 11 (S35). When the CPU 31 determines that the operation to change the machining conditions has been received (yes at S35), the CPU 31 changes and updates the machining conditions stored in the RAM 33 at S21 (refer to FIG. 11) using post-change machining conditions, and stores the post-change machining conditions in the RAM 33 (S37). Further, the CPU 31 adjusts the machining operation started at S23 (refer to FIG. 11), such that the machining operation is executed under the post-change machining conditions. The CPU 31 advances the processing to S39. When the CPU 31 determines that the operation to change the machining conditions has not been received (no at S35), the CPU 31 returns the processing to S39.

The CPU 31 determines whether the machining operation started at S23 (refer to FIG. 11) based on the machining program and the machining conditions is to be ended (S39). When the CPU 31 determines that the machining operation is not to be ended (no at S39), the CPU 31 returns the processing to S35. The CPU 31 repeats the processing at S35 and S37 until the machining operation is to be ended. In this way, the driving of the pump 22 started at S33 is continued, and the first cleaning operation is executed in which the pump 22 is continuously driven.

When the CPU 31 determines that the machining operation has ended (yes at S39), the CPU 31 stops the driving of the pump 22 started at S33 (S41). The CPU 31 ends the measurement of the machining time period started at S25 (refer to FIG. 11) (S43). The CPU 31 acquires the identification information of the machining program, the start position, and the machining conditions stored in the RAM 33. The CPU 31 acquires the machining time period measured at S25 and S43. The CPU 31 stores, in the historical data table, the reference machining information in which the acquired machining time period, the acquired identification information of the machining program, the acquired start position, and the acquired machining conditions are associated with each other (S45). Further, when the operation to change the machining conditions has been received partway through the machining operation (yes at S35), the CPU 31 associates the not-applicable with the stored reference machining information, as the flag information. On the other hand, when the operation to change the machining conditions during the machining operation has not been received (no at S35), the CPU 31 associates the applicable with the stored reference machining information, as the flag information. The CPU 31 returns the processing to S11 (refer to FIG. 11).

When the CPU 31 determines that the matching machining information is included in the historical data table (yes at S31), the CPU 31 extracts the machining time period associated in the matching machining information (S51). Note that, when the CPU 31 determines that a plurality of the matching machining information are included in the historical data table, the CPU 31 extracts the shortest machining time period, of the machining time periods associated with each of the plurality of matching machining information. The CPU 31 determines whether the extracted machining time period is shorter than the first predetermined time period Tend (S53). When the CPU 31 determines that the machining time period is shorter than the first predetermined time period Tend (yes at S53), the CPU 31 controls the drive controller 57A and starts the driving of the pump 22 (S33). In this case, the driving of the pump 22 started at S33 is continued until the machining operation is ended. In this way, the first cleaning operation is executed in which the pump 22 is continuously driven.

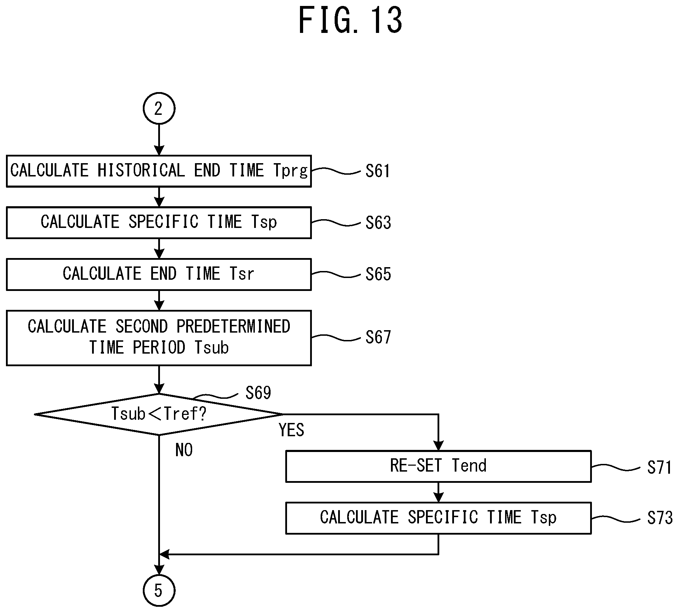

When the CPU 31 determines that the machining time period is equal to or greater than the first predetermined time period Tend (no at S53), the CPU 31 advances the processing to S61 (refer to FIG. 13), in order to start the second cleaning operation (refer to FIG. 9) or the third cleaning operation (refer to FIG. 10).

As shown in FIG. 13, the CPU 31 calculates, as the historical end time Tprg, a time at which the machining time period extracted at S51 (refer to FIG. 12) has elapsed from the time at which the machining operation is started at S23 (refer to FIG. 11) (S61). The CPU 31 calculates, as the specific time Tsp, a time preceding the calculated historical end time Tprg by the first predetermined time period Tend (S63). The CPU 31 calculates, as the end time Tsr, a time at which, in the intermittent drive state started from the time at which the machining operation is started at S23 (refer to FIG. 11), the pump 22 is driven during the first time period Ton immediately before the specific time Tsp and is then stopped (S65). The CPU 31 calculates, as the second predetermined time period Tsub, a time period from the end time Tsr to the specific time Tsp (S67).

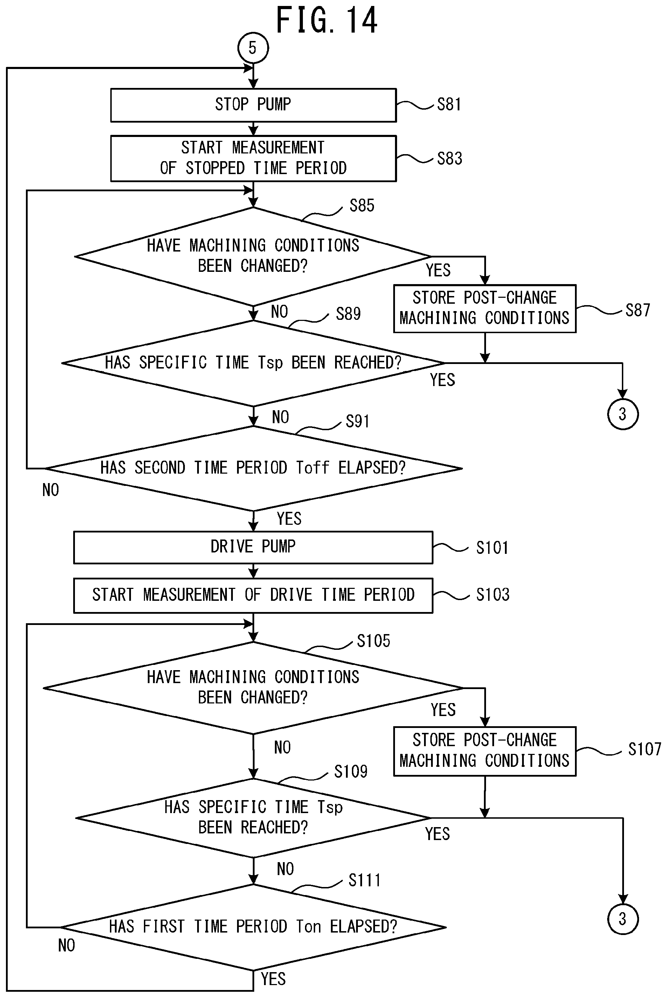

The CPU 31 determines whether the calculated second predetermined time period Tsub is shorter than the reference time period Tref (S69). Note that, when the second predetermined time period Tsub is equal to or greater than the reference time period Tref, the second cleaning operation (refer to FIG. 9) is executed. In this case, it is not necessary to re-set the first predetermined time period Tend. When the CPU 31 determines that the second predetermined time period Tsub is equal to or greater than the reference time period Tref (no at S69), the CPU 31 advances the processing to S81 (refer to FIG. 14).

When the second predetermined time period Tsub is shorter than the reference time period Tref, the CPU 31 executes the third cleaning operation (refer to FIG. 10A and FIG. 10B). The CPU 31 re-sets the first predetermined time period Tend (S71), such that the start time of the first time period Ton in which the pump 22 is driven for the final time in the intermittent drive state matches the specific time Tsp. Based on the re-set first predetermined time period Tend, the CPU 31 calculates the specific time Tsp (S73). The CPU 31 advances the processing to S81 (refer to FIG. 14).

As shown in FIG. 14, the CPU 31 controls the drive controller 57A and stops the driving of the pump 22 (S81). The CPU 31 starts measurement of a stopped time period, in the state in which the driving of the pump 22 is stopped (S83). The CPU 31 determines whether an operation to change the machining conditions (the rapid traverse override, the cutting feed override, the main shaft override, the block skip, and the dry run) has been received via the input portion 11 (S85). When the CPU 31 determines that the operation to change the machining conditions has not been received (no at S85), the CPU 31 determines whether the specific time Tsp has been reached (S89). When the CPU 31 determines that the specific time Tsp has not been reached (no at S89), based on the stopped time period for which the measurement started at S83, the CPU 31 determines whether the second time period Toff has elapsed from the stopping of the driving of the pump 22 (S91). When the CPU 31 determines that the second time period Toff has not elapsed from the stopping of the driving of the pump 22 (no at S91), the CPU 31 returns the processing to S85. When the CPU 31 determines that the second time period Toff has elapsed from the stopping of the driving of the pump 22 (yes at S91), the CPU 31 advances the processing to S101.

The CPU 31 controls the drive controller 57A and starts the driving of the pump 22 (S101). The CPU 31 starts the measurement of a drive time period in the state in which the pump 22 is being driven (S103). The CPU 31 determines whether the operation to change the machining conditions (the rapid traverse override, the cutting feed override, the main shaft override, the block skip, and the dry run) has been received via the input portion 11 (S105). When the CPU 31 determines that the operation to change the machining conditions has not been received (no at S105), the CPU 31 determines whether the specific time Tsp has been reached (S109). When the CPU 31 determines that the specific time Tsp has not been reached (no at S109), based on the drive time period for which the measurement is started at S103, the CPU 31 determines whether the first time period Ton has elapsed from the start of the driving of the pump 22 (S111). When the CPU 31 determines that the first time period Ton has not elapsed from the start of the driving of the pump 22 (no at S111), the CPU 31 returns the processing to S105. When the CPU 31 determines that the first time period Ton has elapsed from the start of the driving of the pump 22 (yes at S111), the CPU 31 returns the processing to S81. The CPU 31 controls the drive controller 57A and stops the driving of the pump 22 (S81). By repeating the processing from S81 to S111, the intermittent drive state is obtained in which the pump 22 is driven intermittently.

When the CPU 31 determines that the specific time Tsp has been reached in the intermittent drive state (yes at S89, yes at S109), the CPU 31 returns the processing to S33 (refer to FIG. 12). As shown in FIG. 12, the CPU 31 controls the drive controller 57A and starts the driving of the pump 22 (S33). In this way, the intermittent drive state ends, and is switched to the continuous drive state. The CPU 31 determines whether the machining operation started at S23 (refer to FIG. 11) is to be ended (S39). When the CPU 31 determines that the machining operation is to be ended (yes at S39), the CPU 31 stops the driving of the pump 22 started at S33 (S41). In other words, the pump 22 is continuously driven during the period from the specific time Tsp to the end of the machining operation.

The CPU 31 ends the measurement of the machining time period started at S25 (refer to FIG. 11) (S43). The CPU 31 stores, in the historical data table, the reference machining information in which the machining time period, and the identification information of the machining program, the start position, and the machining conditions are associated with each other (S45). Further, the CPU 31 associates the applicable, as the flag information of the stored reference machining information. The CPU 31 returns the processing to S11 (refer to FIG. 11).

As shown in FIG. 14, when the CPU 31 determines that the operation to change the machining conditions has been received in the intermittent drive state (yes at S85, yes at S105), the CPU 31 stores the changed machining conditions in the RAM 33 (S87, S107). The CPU 31 returns the processing to S33 (refer to FIG. 12). As shown in FIG. 12, the CPU 31 controls the drive controller 57A and starts the driving of the pump 22 (S33). In this way, the intermittent drive state ends, and is switched to the continuous drive state. The CPU 31 determines whether the machining operation started at S23 (refer to FIG. 11) is to be ended (S39). When the CPU 31 determines that the machining operation is to be ended (yes at S39), the CPU 31 stops the driving of the pump 22 started at S33 (S41).

The CPU 31 acquires the machining conditions stored in the RAM 33 at S87 and S107 (refer to FIG. 14), that is, acquires the changed machining conditions. The CPU 31 stores, in the historical data table, the reference machining information in which the measured machining time period, and the identification information of the machining program, the start position, and the changed machining conditions are associated with each other (S45). The CPU 31 associates the not-applicable, as the flag information of the stored reference machining information. The CPU 31 returns the processing to S11 (refer to FIG. 11).

Even when the machining program having the same identification information is executed, the machining time period of the machining operation changes in accordance with the machining conditions. Here, the numerical control device 30 extracts the machining time period from the matching machining information that matches the identification information of the machining program and the machining conditions (S51), and specifies the specific time Tsp (S63). When the specified specific time Tsp has been reached (yes at S89, yes at S109), the numerical control device 30 causes the drive state of the machine tool 1 during the period until the end of the machining operation to be the continuous drive state in which the spray mechanism is continuously driven (S33). In this case, even when the machining time period of the machining program having the same identification information changes in accordance with the machining conditions, the numerical control device 30 contributes to accurately extracting the machining time period of the machining program being executed from the matching machining information. Thus, even when the machining time period changes in accordance with the machining conditions, the numerical control device 30 contributes to starting the driving of the pump 22 at an appropriate time and can appropriately execute the cleaning operation.

The numerical control device 30 intermittently drives the pump 22 in the intermittent drive state in the second cleaning operation and the third cleaning operation (S81, S101). In this case, the numerical control device 30 contributes to reducing the power intended for spraying the cutting fluid, compared to a case in which the pump 22 is continuously driven.

When the machining conditions are changed during the execution of the machining operation, the machine tool 1 is driven under the post-change machining conditions partway through the machining operation. Thus, the machining time period having a high degree of accuracy cannot be extracted. In this type of case, the numerical control device 30 switches from the intermittent drive state of intermittently driving the pump 22 to the continuous drive state of continuously driving the pump 22. In this way, the numerical control device 30 contributes to ensuring that the drive control of the pump 22 is not executed based on the machining time period having a low degree of accuracy.

The machining conditions include the rapid traverse override, the cutting feed override, the main shaft override, the block skip, and the dry run. In this case, the numerical control device 30 contributes to accurately extracting the machining time period of the machining program being executed, from the matching machining information, by extracting the machining time period from the matching machining information having the same rapid traverse override, the same cutting feed override, the same main shaft override, the same block skip, and the same dry run, and specifying the specific time. Thus, even when the machining time period is changed in accordance with the machining conditions, such as the rapid traverse override, the cutting feed override, the main shaft override, the block skip, and the dry run, the numerical control device 30 contributes to appropriately executing the drive control of the pump 22.

When the historical end time Tprg specified based on the machining time period is set to be later than the end time of the actual machining operation, the time period of the cleaning operation by the driving of the pump 22 is insufficient, and this is not desirable. Here, when it is determined that the plurality of matching machining information are stored in the historical data table, the numerical control device 30 extracts the smallest/shortest machining time period associated with each of the plurality of matching machining information (S51). In this case, the numerical control device 30 always contributes to setting the historical end time Tprg specified based on the extracted machining time period before the end time of the machining operation, regardless of the machining conditions. Thus, the numerical control device 30 contributes to the sufficient drive time period of the pump 22 in the continuous drive state.

The numerical control device 30 continuously drives the pump 22 in the continuous drive state during the first predetermined time period Tend that is longer than the first time period Ton in which the pump 22 is intermittently driven in the intermittent drive state. In this case, the numerical control device 30 contributes to more reliably washing away the chips with the cutting fluid, up to the time at which the machining operation ends.

When the matching machining time period is not stored in the historical data table (no at S31), it is not possible to specify the historical end time Tprg based on the machining time period. In this case, the numerical control device 30 contributes to reliably washing away the chips by continuously driving the pump 22 (S33).

When the second predetermined time period Tsub is shorter than the reference time period Tref (yes at S69), the numerical control device 30 re-sets the first predetermined time period Tend (S71), such that the start time of the first time period Ton in which the pump 22 is driven for the final time in the intermittent drive state matches the specific time Tsp. In this case, the switch is made to the continuous drive state immediately after the intermittent drive state, and the pump 22 is continuously driven until the end of the machining operation. In this way, the numerical control device 30 contributes to preventing the pump 22 from being stopped for a short time period after the end of the intermittent drive state, and the pump 22 being subsequently continuously driven when the continuous drive state is obtained. In this way, the numerical control device 30 contributes to reducing the power intended for spraying the cutting fluid.

The present disclosure is not limited to the above-described embodiment, and various modifications are possible. The numerical control device 30 may maintain the machine tool 1 in the intermittent drive state, even when the machining conditions are changed during the machining operation by the machine tool 1 that is in the intermittent drive state. The numerical control device 30 may stop the pump 22 of the machine tool 1 without executing the intermittent driving during a period before reaching the specific time Tsp. The numerical control device 30 may continuously drive the pump 22, as the continuous drive state, during a period from the specific time Tsp to the time at which the machining operation ends.

The machining conditions may be one of the rapid traverse override, the cutting feed override, the main shaft override, the block skip, the dry run, or a combination thereof, or conditions other than the rapid traverse override, the cutting feed override, the main shaft override, the block skip, and the dry run may be included in the machining conditions.

Even when the reference machining information in which some of the rapid traverse override, the cutting feed override, the main shaft override, the block skip, and the dry run included in the machining conditions set at the time of the machining operation are the same is included in the historical data table, the numerical control device 30 may treat this reference machining information as the matching machining information and extract the machining time period therefrom. Further, when the reference machining information that includes a value within a predetermined margin (± 10%, for example) with respect to the range (0-100%) of the rapid traverse override, the cutting feed override, and the main shaft override included in the set machining conditions is stored in the historical data table, this reference machining information may be treated as the matching machining information and the machining time period may be extracted therefrom.

When it is determined that the plurality of matching machining information is stored in the historical data table, the numerical control device 30 may extract, as the machining time period, a value that is statistically calculated from the machining time periods associated with each of the plurality of matching machining information. For example, the numerical control device 30 may extract, as the machining time period, an average value or a median value of the machining time periods associated with each of the plurality of matching machining information.

The first predetermined time period Tend may be shorter than the first time period Ton. Note that, depending on the machining program, a small quantity of chips is generated in a latter half of the machining operation. In this type of case, even when the first predetermined time period Tend is shorter than the first time period Ton, the chips can be sufficiently washed away by the cutting fluid. Thus, the numerical control device 30 contributes to reducing the power intended for spraying the cutting fluid, while appropriately washing away the chips using the cutting fluid.

Even when the matching machining information is not stored in the historical data table, the numerical control device 30 may initially cause the machine tool 1 to be in the intermittent drive state and subsequently be in the continuous drive state.

The historical data table may not be stored in the non-volatile storage device 34 of the numerical control device 30, and may be stored in another storage portion. For example, a plurality of machine tools including the machine tool 1 may be installed in a factory. Each of the plurality of machine tools may include a network interface, and be able to access an external server. The historical data table may be stored in a storage portion of the external server. The numerical control device 30 of the machine tool 1 may perform communication with the external server, and may refer to the historical data table stored in the storage portion of the external server.

The pump 22 is an example of a "spray mechanism" of the present disclosure. The non-volatile storage device 34 storing the historical data table is an example of a "storage portion" of the present disclosure. The CPU 31 that performs the processing at S11 is an example of "reception processing" of the present disclosure. The CPU 31 that performs the processing at S19 is an example of "condition setting processing" of the present disclosure. The CPU 31 that performs the processing at S23 is an example of "machining execution control processing" of the present disclosure. The CPU 31 that performs the processing at S25 and S43 is an example of the "measurement processing" of the present disclosure. The CPU 31 that performs the processing at S45 is an example of "storage control processing" of the present disclosure. The CPU 31 that performs the processing at S31 is an example of "information determination processing" of the present disclosure. The CPU 31 that performs the processing at S51 is an example of "time period extraction processing" of the present disclosure. The CPU 31 that performs the processing at S89 and S109 is an example of "first determination processing" of the present disclosure. The CPU 31 that performs the processing at S69 is an example of "second determination processing" of the present disclosure. The CPU 31 that performs the processing at S33 is an example of "first drive processing", "third drive processing", "fourth drive processing", and "fifth drive processing" of the present disclosure. The CPU 31 that performs the processing at S81 and S101 is an example of "second drive processing" of the present disclosure. The CPU 31 that performs the processing at S85 and S105 is an example of "change determination processing" of the present disclosure. The processing at S11 is an example of a "reception process" of the present disclosure. The processing at S19 is an example of a "condition setting process" of the present disclosure. The processing at S23 is an example of a "machining execution processing process" of the present disclosure. The processing at S25 and S43 is an example of the "measurement process" of the present disclosure. The processing at S45 is an example of a "storage control process" of the present disclosure. The processing at S31 is an example of an "information determination process" of the present disclosure. The processing at S51 is an example of a "time period extraction process" of the present disclosure. The processing at S89 and S109 is an example of a "first determination process" of the present disclosure. The processing at S33 is an example of a "first drive process" of the present disclosure.

## Claims

1. A numerical control device (30) that controls a machine tool (1) with a spray mechanism (22) that is configured to spray a cutting fluid inside a cover (4) so as to wash away chips generated during machining, the numerical control device (30) executing processes comprising:
reception processing of receiving an operation to select a machining program of the machine tool (1);
condition setting processing of setting machining conditions for when the machine tool (1) is driven to machine a workpiece (T) based on the machining program selected in the operation received by the reception processing; and
machining execution control processing of executing a machining operation, the machining operation driving the machine tool (1) and machining the workpiece (T) based on the machining program received by the reception processing, under the machining conditions set by the condition setting processing, wherein
the machining execution control processing includes
measurement processing of measuring a machining time period over which the machining operation is executed,
storage control processing of storing reference machining information in a storage portion (34) when the machining operation is complete, the reference machining information being identification information of the machining program, in association with the machining conditions set by the condition setting process, and with the machining time period measured by the measurement processing,
information determination processing of, in a state in which the reference machining information is stored in the storage portion (34) by the storage control processing, when the operation to select the machining program is received by the reception processing and the machining conditions are set by the condition setting processing, determining whether matching machining information is stored in the storage portion (34), the matching machining information being reference machining information of which the identification information matches the identification information of the selected machining program and the machining conditions of which match the set machining conditions,
time period extraction processing of extracting the machining time period associated in the matching machining information, when it is determined by the information determination processing that the matching machining information is stored in the storage portion (34),
first determination processing of determining, based on the machining time period extracted by the time period extraction processing, whether a specific time has been reached, the specific time being the machining time period extracted by the time period extraction process reduced by a first predetermined time period, and
first drive processing of, when it is determined by the first determination processing that the specific time has been reached, driving the spray mechanism (22) during a period from the specific time to the end of the machining operation.

2. The numerical control device (30) according to claim 1, further executing a process comprising:
second drive processing of intermittently driving the spray mechanism (22) during execution of the machining operation by the machining execution control processing.

3. The numerical control device (30) according to claim 2, further executing processes comprising:
change determination processing of determining whether setting of the machining conditions has been received during the execution of the machining operation by the machining execution control processing; and
third drive processing of, when it is determined by the change determination processing that the setting of the machining conditions has been received, stopping the intermittent driving of the spray mechanism (22) by the second drive processing and continuously driving the spray mechanism (22).

4. The numerical control device (30) according to claim 1, wherein
the machining conditions include one of an override, a program skip, a dry run, or a combination thereof.

5. The numerical control device (30) according to claim 1, wherein
when it is determined by the information determination processing that a plurality of the matching machining information is stored in the storage portion (34), the time period extraction processing extracts the shortest machining time period, of the machining time periods associated with each of the plurality of matching machining information.

6. The numerical control device (30) according to claim 2, wherein
the second drive processing repeatedly executes driving the spray mechanism (22) for a first time period, and stopping the spray mechanism (22) for a second time period subsequent to driving the spray mechanism (22) for the first time period, and
the first predetermined time period is shorter than the first time period.

7. The numerical control device (30) according to claim 2, wherein
the second drive processing repeatedly executes driving the spray mechanism (22) for a first time period, and stopping the spray mechanism (22) for a second time period subsequent to driving the spray mechanism (22) for the first time period, and
the first predetermined time period is longer than the first time period.

8. The numerical control device (30) according to claim 1, further executing a process comprising:
fourth drive processing of, when it is determined by the information determination processing that the matching machining information is not stored in the storage portion (34), continuously driving the spray mechanism (22) during a period from a start to the end of the machining operation.

9. The numerical control device (30) according to claim 2, wherein
the second drive processing repeatedly executes driving the spray mechanism (22) for a first time period, and stopping the spray mechanism (22) for a second time period subsequent to driving the spray mechanism (22) for the first time period, and
the numerical control device (30) further executes processes comprising:
second determination processing of determining whether a second predetermined time period is shorter than a predetermined reference time period, the second time period being a time period up to the specific time from stopping the driving of the spray mechanism (22) for a final time before the end of the machining operation by the second drive processing; and
fifth drive processing of, when it is determined by the second determination processing that the second predetermined time period is shorter than the reference time period, continuously driving the spray mechanism (22) during a period from a start time of driving the spray mechanism (22) during the first time period for a final time to the end time of the machining operation.

10. A control method that controls a machine tool (1) with a spray mechanism (22) that is configured to spray a cutting fluid inside a cover (4) so as to wash away chips generated during machining, the control method executing processes comprising:
a reception process of receiving an operation to select a machining program of the machine tool (1);
a condition setting process of setting machining conditions for when the machine tool (1) is driven to machine a workpiece (T) based on the machining program selected in the operation received by the reception process; and
a machining execution control process of executing a machining operation, the machining operation driving the machine tool (1) and machining the workpiece (T) based on the machining program received by the reception process, under the machining conditions set by the condition setting process, wherein
the machining execution control process includes
a measurement process of measuring a machining time period over which the machining operation is executed,
a storage control process of storing reference machining information in a storage portion (34) when the machining operation is complete, the reference machining information being identification information of the machining program, in association with the machining conditions set by the condition setting process, and with the machining time period measured by the measurement process,
an information determination process of, in a state in which the reference machining information is stored in the storage portion (34) by the storage control process, when the operation to select the machining program is received by the reception process and the machining conditions are set by the condition setting process, determining whether matching machining information is stored in the storage portion (34), the matching machining information being reference machining information of which the identification information matches the identification information of the selected machining program and the machining conditions of which match the set machining conditions,
a time period extraction process of extracting the machining time period associated in the matching machining information, when it is determined by the information determination process that the matching machining information is stored in the storage portion (34),
a first determination process of determining, based on the machining time period extracted by the time period extraction process, whether a specific time has been reached, the specific time being the machining time period extracted by the time period extraction process reduced by a first predetermined time period, and
a first drive process of, when it is determined by the first determination process that the specific time has been reached, driving the spray mechanism (22) during a period from the specific time to the end of the machining operation.

11. A control program that causes a computer, which controls a machine tool (1) with a spray mechanism (22) that is configured to spray a cutting fluid inside a cover (4) so as to wash away chips generated during machining, to execute processes comprising:
a reception process of receiving an operation to select a machining program of the machine tool (1);
a condition setting process of setting machining conditions for when the machine tool (1) is driven to machine a workpiece (T) based on the machining program selected in the operation received by the reception process; and
a machining execution control process of executing a machining operation, the machining operation driving the machine tool (1) and machining the workpiece (T) based on the machining program received by the reception process, under the machining conditions set by the condition setting process, wherein
the machining execution control process includes
a measurement process of measuring a machining time period over which the machining operation is executed,
a storage control process of storing reference machining information in a storage portion (34) when the machining operation is complete, the reference machining information being identification information of the machining program, in association with the machining conditions set by the condition setting process, and with the machining time period measured by the measurement process,
an information determination process of, in a state in which the reference machining information is stored in the storage portion (34) by the storage control process, when the operation to select the machining program is received by the reception process and the machining conditions are set by the condition setting process, determining whether matching machining information is stored in the storage portion (34), the matching machining information being reference machining information of which the identification information matches the identification information of the selected machining program and the machining conditions of which match the set machining conditions,
a time period extraction process of extracting the machining time period associated in the matching machining information, when it is determined by the information determination process that the matching machining information is stored in the storage portion (34),
a first determination process of determining, based on the machining time period extracted by the time period extraction process, whether a specific time has been reached, the specific time being the machining time period extracted by the time period extraction process reduced by a first predetermined time period, and
a first drive process of, when it is determined by the first determination process that the specific time has been reached, driving the spray mechanism (22) during a period from the specific time to the end of the machining operation.

12. A storage medium storing a control program that causes a computer, which controls a machine tool (1) with a spray mechanism (22) that is configured to spray a cutting fluid inside a cover (4) so as to wash away chips generated during machining, to execute processes comprising:
a reception process of receiving an operation to select a machining program of the machine tool (1);
a condition setting process of setting machining conditions for when the machine tool (1) is driven to machine a workpiece (T) based on the machining program selected in the operation received by the reception process; and
a machining execution control process of executing a machining operation, the machining operation driving the machine tool (1) and machining the workpiece (T) based on the machining program received by the reception process, under the machining conditions set by the condition setting process, wherein
the machining execution control process includes
a measurement process of measuring a machining time period over which the machining operation is executed,
a storage control process of storing reference machining information in a storage portion (34) when the machining operation is complete, the reference machining information being identification information of the machining program, in association with the machining conditions set by the condition setting process, and with the machining time period measured by the measurement process,
an information determination process of, in a state in which the reference machining information is stored in the storage portion (34) by the storage control process, when the operation to select the machining program is received by the reception process and the machining conditions are set by the condition setting process, determining whether matching machining information is stored in the storage portion (34), the matching machining information being reference machining information of which the identification information matches the identification information of the selected machining program and the machining conditions of which match the set machining conditions,
a time period extraction process of extracting the machining time period associated in the matching machining information, when it is determined by the information determination process that the matching machining information is stored in the storage portion (34),
a first determination process of determining, based on the machining time period extracted by the time period extraction process, whether a specific time has been reached, the specific time being the machining time period extracted by the time period extraction process reduced by a first predetermined time period, and
a first drive process of, when it is determined by the first determination process that the specific time has been reached, driving the spray mechanism (22) during a period from the specific time to the end of the machining operation.

## Patentansprüche

1. Numerische Steuervorrichtung (30), die eine Werkzeugmaschine (1) mit einem Sprühmechanismus (22) steuert, der so konfiguriert ist, dass er eine Schneidflüssigkeit innerhalb einer Abdeckung (4) versprüht, um die bei der Bearbeitung entstehenden Späne wegzuspülen, wobei die numerische Steuervorrichtung (30) folgende Prozesse ausführt:
einen Empfangsvorgang zum Empfangen einer Operation zur Auswahl eines Bearbeitungsprogramms für die Werkzeugmaschine (1);
einen Bedingungseinstellungsvorgang zum Einstellen von Bearbeitungsbedingungen für den Fall, dass die Werkzeugmaschine (1) zum Bearbeiten eines Werkstücks (T) angesteuert wird, basierend auf dem Bearbeitungsprogramm, das in der Operation ausgewählt wird, die von dem Empfangsvorgang empfangen wird; und
einen Bearbeitungsausführungs-Steuervorgang zum Ausführen einer Bearbeitungsoperation, wobei die Bearbeitungsoperation die Werkzeugmaschine (1) ansteuert und das Werkstück (T) basierend auf dem Bearbeitungsprogramm bearbeitet, das von dem Empfangsvorgang empfangen wird, unter den Bearbeitungsbedingungen, die durch den Bedingungseinstellungsvorgang festgelegt werden, wobei
der Bearbeitungsausführungs-Steuervorgang Folgendes enthält:
einen Messvorgang zum Messen eines Bearbeitungszeitraums, über den die Bearbeitungsoperation ausgeführt wird,
einen Speichersteuervorgang zum Speichern von Referenzbearbeitungsinformationen in einem Speicherbereich (34), wenn der Bearbeitungsvorgang abgeschlossen ist, wobei die Referenzbearbeitungsinformationen Identifikationsinformationen des Bearbeitungsprogramms sind, die den durch den Bedingungseinstellungsvorgang festgelegten Bearbeitungsbedingungen und dem Bearbeitungszeitraum zugeordnet sind, der durch den Messvorgang gemessen wird,
einen Informationsbestimmungsvorgang zum Bestimmen, ob übereinstimmende Bearbeitungsinformationen im Speicherbereich (34) in einem Zustand gespeichert sind, in dem die Referenzbearbeitungsinformationen durch den Speichersteuervorgang im Speicherbereich (34) gespeichert sind, wenn die Operation zur Auswahl des Bearbeitungsprogramms durch den Empfangsvorgang empfangen wird und die Bearbeitungsbedingungen durch den Bedingungseinstellvorgang festgelegt werden, wobei es sich bei den übereinstimmenden Bearbeitungsinformationen um Referenzbearbeitungsinformationen handelt, deren Identifikationsinformationen mit den Identifikationsinformationen des ausgewählten Bearbeitungsprogramms übereinstimmen und deren Bearbeitungsbedingungen mit den festgelegten Bearbeitungsbedingungen übereinstimmen,
einen Zeitraumextraktionsvorgang zum Extrahieren des zu den übereinstimmenden Bearbeitungsinformationen zugeordneten Bearbeitungszeitraums, wenn durch den Informationsbestimmungsvorgang bestimmt wird, dass die übereinstimmenden Bearbeitungsinformationen im Speicherbereich (34) gespeichert sind,
einen ersten Bestimmungsvorgang zum Bestimmen, ob ein bestimmter Zeitpunkt erreicht wurde, basierend auf dem durch den Zeitraumerfassungsvorgang ermittelten Bearbeitungszeitraum, wobei der bestimmte Zeitpunkt der durch den Zeitraumerfassungsvorgang ermittelte Bearbeitungszeitraum ist, der um einen ersten vorgegebenen Zeitraum verkürzt wurde, und
einen ersten Ansteuervorgang, bei dem der Sprühmechanismus (22) während eines Zeitraums vom bestimmten Zeitpunkt bis zum Ende des Bearbeitungsvorgangs angesteuert wird, wenn durch den ersten Bestimmungsvorgang bestimmt wird, dass der bestimmte Zeitpunkt erreicht wurde.

2. Numerische Steuervorrichtung (30) nach Anspruch 1, die ferner einen Prozess ausführt, der Folgendes umfasst:
einen zweiten Ansteuervorgang zum intermittierenden Ansteuern des Sprühmechanismus (22) während der Ausführung des Bearbeitungsvorgangs durch den Bearbeitungsausführungs-Steuervorgang.

3. Numerische Steuervorrichtung (30) nach Anspruch 2, die ferner Prozesse ausführt, die Folgendes umfassen:
einen Änderungsbestimmungsvorgang zum Bestimmen, ob während der Ausführung des Bearbeitungsvorgangs durch den Bearbeitungsausführungs-Steuervorgang eine Einstellung der Bearbeitungsbedingungen empfangen wurde; und
einen dritten Ansteuervorgang, mit dem die intermittierende Ansteuerung des Sprühmechanismus (22) durch den zweiten Ansteuervorgang gestoppt und der Sprühmechanismus (22) kontinuierlich angesteuert wird, wenn durch den Änderungsbestimmungsvorgang bestimmt wird, dass die Einstellung der Bearbeitungsbedingungen empfangen wurde.

4. Numerische Steuervorrichtung (30) nach Anspruch 1, wobei
die Bearbeitungsbedingungen entweder eine Übersteuerung, einen Programmübersprung, einen Trockenlauf oder eine Kombination davon enthalten.

5. Numerische Steuervorrichtung (30) nach Anspruch 1, wobei
wenn durch den Informationsbestimmungsvorgang bestimmt wird, dass eine Vielzahl der übereinstimmenden Bearbeitungsinformationen im Speicherbereich (34) gespeichert sind, der Zeitraumermittlungsvorgang den kürzesten Bearbeitungszeitraum aus den Bearbeitungszeiträumen extrahiert, die jeder der Vielzahl von übereinstimmenden Bearbeitungsinformationen zugeordnet sind.

6. Numerische Steuervorrichtung (30) nach Anspruch 2, wobei
der zweite Ansteuervorgang wiederholt das Ansteuern des Sprühmechanismus (22) für einen ersten Zeitraum und das Anhalten des Sprühmechanismus (22) für einen zweiten Zeitraum im Anschluss an das Ansteuern des Sprühmechanismus (22) für den ersten Zeitraum ausführt, und
der erste vorbestimmte Zeitraum kürzer ist als der erste Zeitraum.

7. Numerische Steuervorrichtung (30) nach Anspruch 2, wobei
der zweite Ansteuervorgang wiederholt das Ansteuern des Sprühmechanismus (22) für einen ersten Zeitraum und das Anhalten des Sprühmechanismus (22) für einen zweiten Zeitraum im Anschluss an das Ansteuern des Sprühmechanismus (22) für den ersten Zeitraum ausführt, und
der erste vorbestimmte Zeitraum länger ist als der erste Zeitraum.

8. Numerische Steuervorrichtung (30) nach Anspruch 1, die ferner einen Prozess ausführt, der Folgendes umfasst:
einen vierten Ansteuervorgang, bei dem der Sprühmechanismus (22) während eines Zeitraums vom Beginn bis zum Ende des Bearbeitungsvorgangs kontinuierlich angesteuert wird, wenn durch den Informationsbestimmungsvorgang bestimmt wird, dass die übereinstimmenden Bearbeitungsinformationen nicht im Speicherbereich (34) gespeichert sind, .

9. Numerische Steuervorrichtung (30) nach Anspruch 2, wobei der zweite Ansteuervorgang wiederholt das Ansteuern des Sprühmechanismus (22) für einen ersten Zeitraum und das Anhalten des Sprühmechanismus (22) für einen zweiten Zeitraum im Anschluss an das Ansteuern des Sprühmechanismus (22) für den ersten Zeitraum ausführt, und
die numerische Steuervorrichtung (30) ferner Vorgänge ausführt, die Folgendes umfassen:
einen zweiten Bestimmungsvorgang zum Bestimmen, ob ein zweiter vorbestimmter Zeitraum kürzer ist als ein vorbestimmter Referenzzeitraum, wobei der zweite Zeitraum ein Zeitraum bis zu dem bestimmten Zeitpunkt ist, ab dem die Ansteuerung des Sprühmechanismus (22) durch den zweiten Ansteuervorgang ein letztes Mal vor dem Ende des Bearbeitungsvorgangs gestoppt wird; und
einen fünften Ansteuervorgang, bei dem der Sprühmechanismus (22) während eines Zeitraums von einem Startzeitpunkt der letzten Ansteuerung des Sprühmechanismus (22) während des ersten Zeitraums bis zum Endzeitpunkt des Bearbeitungsvorgangs kontinuierlich angesteuert wird, wenn durch den zweiten Bestimmungsvorgang bestimmt wird, dass der zweite vorgegebene Zeitraum kürzer ist als der Referenzzeitraum.

10. Steuerverfahren, das eine Werkzeugmaschine (1) mit einem Sprühmechanismus (22) steuert, der so konfiguriert ist, dass er eine Schneidflüssigkeit innerhalb einer Abdeckung (4) versprüht, um die bei der Bearbeitung entstehenden Späne wegzuspülen, wobei das Steuerverfahren Prozesse ausführt, die Folgendes umfassen:
einen Empfangsvorgang zum Empfangen einer Operation zur Auswahl eines Bearbeitungsprogramms für die Werkzeugmaschine (1);
einen Bedingungseinstellungsvorgang zum Einstellen von Bearbeitungsbedingungen für den Fall, dass die Werkzeugmaschine (1) zum Bearbeiten eines Werkstücks (T) angesteuert wird, basierend auf dem Bearbeitungsprogramm, das in der Operation ausgewählt wird, die von dem Empfangsvorgang empfangen wird; und
einen Bearbeitungsausführungs-Steuervorgang zum Ausführen einer Bearbeitungsoperation, wobei die Bearbeitungsoperation die Werkzeugmaschine (1) ansteuert und das Werkstück (T) basierend auf dem Bearbeitungsprogramm bearbeitet, das von dem Empfangsvorgang empfangen wird, unter den Bearbeitungsbedingungen, die durch den Bedingungseinstellungsvorgang festgelegt werden, wobei
der Bearbeitungsausführungs-Steuervorgang Folgendes enthält:
einen Messvorgang zum Messen eines Bearbeitungszeitraums, über den die Bearbeitungsoperation ausgeführt wird,
einen Speichersteuervorgang zum Speichern von Referenzbearbeitungsinformationen in einem Speicherbereich (34), wenn der Bearbeitungsvorgang abgeschlossen ist, wobei die Referenzbearbeitungsinformationen Identifikationsinformationen des Bearbeitungsprogramms sind, die den durch den Bedingungseinstellungsvorgang festgelegten Bearbeitungsbedingungen und dem Bearbeitungszeitraum zugeordnet sind, der durch den Messvorgang gemessen wird,
einen Informationsbestimmungsvorgang zum Bestimmen, ob übereinstimmende Bearbeitungsinformationen im Speicherbereich (34) in einem Zustand gespeichert sind, in dem die Referenzbearbeitungsinformationen durch den Speichersteuervorgang im Speicherbereich (34) gespeichert sind, wenn die Operation zur Auswahl des Bearbeitungsprogramms durch den Empfangsvorgang empfangen wird und die Bearbeitungsbedingungen durch den Bedingungseinstellvorgang festgelegt werden, wobei es sich bei den übereinstimmenden Bearbeitungsinformationen um Referenzbearbeitungsinformationen handelt, deren Identifikationsinformationen mit den Identifikationsinformationen des ausgewählten Bearbeitungsprogramms übereinstimmen und deren Bearbeitungsbedingungen mit den festgelegten Bearbeitungsbedingungen übereinstimmen,
einen Zeitraumextraktionsvorgang zum Extrahieren des zu den übereinstimmenden Bearbeitungsinformationen zugeordneten Bearbeitungszeitraums, wenn durch den Informationsbestimmungsvorgang bestimmt wird, dass die übereinstimmenden Bearbeitungsinformationen im Speicherbereich (34) gespeichert sind,
einen ersten Bestimmungsvorgang zum Bestimmen, ob ein bestimmter Zeitpunkt erreicht wurde, basierend auf dem durch den Zeitraumerfassungsvorgang ermittelten Bearbeitungszeitraum, wobei der bestimmte Zeitpunkt der durch den Zeitraumerfassungsvorgang ermittelte Bearbeitungszeitraum ist, der um einen ersten vorgegebenen Zeitraum verkürzt wurde, und
einen ersten Ansteuervorgang, bei dem der Sprühmechanismus (22) während eines Zeitraums vom bestimmten Zeitpunkt bis zum Ende des Bearbeitungsvorgangs angesteuert wird, wenn durch den ersten Bestimmungsvorgang bestimmt wird, dass der bestimmte Zeitpunkt erreicht wurde.

11. Steuerprogramm, das einen Computer veranlasst, der eine Werkzeugmaschine (1) mit einem Sprühmechanismus (22) steuert, der so konfiguriert ist, dass er eine Schneidflüssigkeit innerhalb einer Abdeckung (4) versprüht, um die bei der Bearbeitung entstehenden Späne wegzuspülen, folgende Prozesse auszuführen:
einen Empfangsvorgang zum Empfangen einer Operation zur Auswahl eines Bearbeitungsprogramms für die Werkzeugmaschine (1);
einen Bedingungseinstellungsvorgang zum Einstellen von Bearbeitungsbedingungen für den Fall, dass die Werkzeugmaschine (1) zum Bearbeiten eines Werkstücks (T) angesteuert wird, basierend auf dem Bearbeitungsprogramm, das in der Operation ausgewählt wird, die von dem Empfangsvorgang empfangen wird; und
einen Bearbeitungsausführungs-Steuervorgang zum Ausführen einer Bearbeitungsoperation, wobei die Bearbeitungsoperation die Werkzeugmaschine (1) ansteuert und das Werkstück (T) basierend auf dem Bearbeitungsprogramm bearbeitet, das von dem Empfangsvorgang empfangen wird, unter den Bearbeitungsbedingungen, die durch den Bedingungseinstellungsvorgang festgelegt werden, wobei
der Bearbeitungsausführungs-Steuervorgang Folgendes enthält:
einen Messvorgang zum Messen eines Bearbeitungszeitraums, über den die Bearbeitungsoperation ausgeführt wird,
einen Speichersteuervorgang zum Speichern von Referenzbearbeitungsinformationen in einem Speicherbereich (34), wenn der Bearbeitungsvorgang abgeschlossen ist, wobei die Referenzbearbeitungsinformationen Identifikationsinformationen des Bearbeitungsprogramms sind, die den durch den Bedingungseinstellungsvorgang festgelegten Bearbeitungsbedingungen und dem Bearbeitungszeitraum zugeordnet sind, der durch den Messvorgang gemessen wird,
einen Informationsbestimmungsvorgang zum Bestimmen, ob übereinstimmende Bearbeitungsinformationen im Speicherbereich (34) in einem Zustand gespeichert sind, in dem die Referenzbearbeitungsinformationen durch den Speichersteuervorgang im Speicherbereich (34) gespeichert sind, wenn die Operation zur Auswahl des Bearbeitungsprogramms durch den Empfangsvorgang empfangen wird und die Bearbeitungsbedingungen durch den Bedingungseinstellvorgang festgelegt werden, wobei es sich bei den übereinstimmenden Bearbeitungsinformationen um Referenzbearbeitungsinformationen handelt, deren Identifikationsinformationen mit den Identifikationsinformationen des ausgewählten Bearbeitungsprogramms übereinstimmen und deren Bearbeitungsbedingungen mit den festgelegten Bearbeitungsbedingungen übereinstimmen,
einen Zeitraumextraktionsvorgang zum Extrahieren des zu den übereinstimmenden Bearbeitungsinformationen zugeordneten Bearbeitungszeitraums, wenn durch den Informationsbestimmungsvorgang bestimmt wird, dass die übereinstimmenden Bearbeitungsinformationen im Speicherbereich (34) gespeichert sind,
einen ersten Bestimmungsvorgang zum Bestimmen, ob ein bestimmter Zeitpunkt erreicht wurde, basierend auf dem durch den Zeitraumerfassungsvorgang ermittelten Bearbeitungszeitraum, wobei der bestimmte Zeitpunkt der durch den Zeitraumerfassungsvorgang ermittelte Bearbeitungszeitraum ist, der um einen ersten vorgegebenen Zeitraum verkürzt wurde, und
einen ersten Ansteuervorgang, bei dem der Sprühmechanismus (22) während eines Zeitraums vom bestimmten Zeitpunkt bis zum Ende des Bearbeitungsvorgangs angesteuert wird, wenn durch den ersten Bestimmungsvorgang bestimmt wird, dass der bestimmte Zeitpunkt erreicht wurde.

12. Speichermedium, das ein Steuerprogramm speichert, das einen Computer veranlasst, der eine Werkzeugmaschine (1) mit einem Sprühmechanismus (22) steuert, der so konfiguriert ist, dass er eine Schneidflüssigkeit innerhalb einer Abdeckung (4) versprüht, um die bei der Bearbeitung entstehenden Späne wegzuspülen, folgende Prozesse auszuführen:
einen Empfangsvorgang zum Empfangen einer Operation zur Auswahl eines Bearbeitungsprogramms für die Werkzeugmaschine (1);
einen Bedingungseinstellungsvorgang zum Einstellen von Bearbeitungsbedingungen für den Fall, dass die Werkzeugmaschine (1) zum Bearbeiten eines Werkstücks (T) angesteuert wird, basierend auf dem Bearbeitungsprogramm, das in der Operation ausgewählt wird, die von dem Empfangsvorgang empfangen wird; und
einen Bearbeitungsausführungs-Steuervorgang zum Ausführen einer Bearbeitungsoperation, wobei die Bearbeitungsoperation die Werkzeugmaschine (1) ansteuert und das Werkstück (T) basierend auf dem Bearbeitungsprogramm bearbeitet, das von dem Empfangsvorgang empfangen wird, unter den Bearbeitungsbedingungen, die durch den Bedingungseinstellungsvorgang festgelegt werden, wobei
der Bearbeitungsausführungs-Steuervorgang Folgendes enthält:
einen Messvorgang zum Messen eines Bearbeitungszeitraums, über den die Bearbeitungsoperation ausgeführt wird,
einen Speichersteuervorgang zum Speichern von Referenzbearbeitungsinformationen in einem Speicherbereich (34), wenn der Bearbeitungsvorgang abgeschlossen ist, wobei die Referenzbearbeitungsinformationen Identifikationsinformationen des Bearbeitungsprogramms sind, die den durch den Bedingungseinstellungsvorgang festgelegten Bearbeitungsbedingungen und dem Bearbeitungszeitraum zugeordnet sind, der durch den Messvorgang gemessen wird,
einen Informationsbestimmungsvorgang zum Bestimmen, ob übereinstimmende Bearbeitungsinformationen im Speicherbereich (34) in einem Zustand gespeichert sind, in dem die Referenzbearbeitungsinformationen durch den Speichersteuervorgang im Speicherbereich (34) gespeichert sind, wenn die Operation zur Auswahl des Bearbeitungsprogramms durch den Empfangsvorgang empfangen wird und die Bearbeitungsbedingungen durch den Bedingungseinstellvorgang festgelegt werden, wobei es sich bei den übereinstimmenden Bearbeitungsinformationen um Referenzbearbeitungsinformationen handelt, deren Identifikationsinformationen mit den Identifikationsinformationen des ausgewählten Bearbeitungsprogramms übereinstimmen und deren Bearbeitungsbedingungen mit den festgelegten Bearbeitungsbedingungen übereinstimmen,
einen Zeitraumextraktionsvorgang zum Extrahieren des zu den übereinstimmenden Bearbeitungsinformationen zugeordneten Bearbeitungszeitraums, wenn durch den Informationsbestimmungsvorgang bestimmt wird, dass die übereinstimmenden Bearbeitungsinformationen im Speicherbereich (34) gespeichert sind,
einen ersten Bestimmungsvorgang zum Bestimmen, ob ein bestimmter Zeitpunkt erreicht wurde, basierend auf dem durch den Zeitraumerfassungsvorgang ermittelten Bearbeitungszeitraum, wobei der bestimmte Zeitpunkt der durch den Zeitraumerfassungsvorgang ermittelte Bearbeitungszeitraum ist, der um einen ersten vorgegebenen Zeitraum verkürzt wurde, und
einen ersten Ansteuervorgang, bei dem der Sprühmechanismus (22) während eines Zeitraums vom bestimmten Zeitpunkt bis zum Ende des Bearbeitungsvorgangs angesteuert wird, wenn durch den ersten Bestimmungsvorgang bestimmt wird, dass der bestimmte Zeitpunkt erreicht wurde.

## Revendications

1. Dispositif de commande numérique (30) qui commande une machine-outil (1) équipée d'un mécanisme de pulvérisation (22) configuré pour pulvériser un fluide de coupe à l'intérieur d'un capot (4) de sorte à éliminer les copeaux générés pendant l'usinage, le dispositif de commande numérique (30) exécutant des traitements comprenant :
un traitement de réception consistant à recevoir une opération afin de sélectionner un programme d'usinage de la machine-outil (1) ;
un traitement de définition des conditions consistant à définir des conditions d'usinage lorsque la machine-outil (1) est actionnée pour usiner une pièce (T) sur la base du programme d'usinage sélectionné lors de l'opération reçue par le traitement de réception ; et
un traitement de commande d'exécution d'usinage consistant à exécuter une opération d'usinage, l'opération d'usinage actionnant la machine-outil (1) et usinant la pièce (T) sur la base du programme d'usinage reçu lors du traitement de réception, dans les conditions d'usinage définies par le traitement de définition des conditions, dans lequel
le traitement de commande d'exécution d'usinage comprend
un traitement de mesure consistant à mesurer une durée d'usinage pendant laquelle l'opération d'usinage est exécutée,
un traitement de commande de stockage consistant à stocker des informations d'usinage de référence dans une portion de stockage (34) lorsque l'opération d'usinage est terminée, les informations d'usinage de référence étant des informations d'identification du programme d'usinage, en association avec les conditions d'usinage définies par le traitement de définition des conditions, ainsi que la durée d'usinage mesurée par le traitement de mesure,
un traitement de détermination d'informations consistant, dans un état où les informations d'usinage de référence sont stockées dans la portion de stockage (34) par le traitement de commande de stockage, lorsque l'opération consistant à sélectionner le programme d'usinage est reçue par le traitement de réception et que les conditions d'usinage sont définies par le traitement de définition des conditions, à déterminer si des informations d'usinage correspondantes sont stockées ou non dans la portion de stockage (34), les informations d'usinage correspondantes étant des informations d'usinage de référence dont les informations d'identification correspondent aux informations d'identification du programme d'usinage sélectionné et dont les conditions d'usinage correspondent aux conditions d'usinage définies,
un traitement d'extraction de durée consistant à extraire la durée d'usinage associée dans les informations d'usinage correspondantes, lorsqu'il est déterminé par le traitement de détermination d'informations que les informations d'usinage correspondantes sont stockées dans la portion de stockage (34),
un premier traitement de détermination consistant à déterminer, sur la base de la durée d'usinage extraite par le traitement d'extraction de durée, si un moment spécifique a été atteint, le moment spécifique étant la durée d'usinage extraite par le traitement d'extraction de durée, diminuée d'une première durée prédéterminée, et
un premier traitement d'actionnement consistant, lorsqu'il est déterminé par le premier traitement de détermination que le moment spécifique a été atteint, à actionner le mécanisme de pulvérisation (22) pendant une période allant du moment spécifique jusqu'à la fin de l'opération d'usinage.

2. Dispositif de commande numérique (30) selon la revendication 1, exécutant en outre un traitement comprenant :
un deuxième traitement d'actionnement consistant à actionner par intermittence le mécanisme de pulvérisation (22) pendant l'exécution de l'opération d'usinage par le traitement de commande d'exécution d'usinage.

3. Dispositif de commande numérique (30) selon la revendication 2, exécutant en outre des traitements comprenant :
un traitement de détermination de changement consistant à déterminer si le réglage des conditions d'usinage a été reçu ou non au cours de l'exécution de l'opération d'usinage par le traitement de commande d'exécution d'usinage ; et
un troisième traitement d'actionnement consistant, lorsqu'il est déterminé par le traitement de détermination de changement que le réglage des conditions d'usinage a été reçu, à arrêter l'actionnement par intermittence du mécanisme de pulvérisation (22) par le deuxième traitement d'actionnement et à actionner le mécanisme de pulvérisation (22) en continu.

4. Dispositif de commande numérique (30) selon la revendication 1, dans lequel
les conditions d'usinage comprennent un élément parmi une correction, un saut de programme, une marche à vide ou une combinaison de ceux-ci.

5. Dispositif de commande numérique (30) selon la revendication 1, dans lequel
lorsqu'il est déterminé, par le traitement de détermination d'informations, qu'une pluralité d'informations d'usinage correspondantes est stockée dans la portion de stockage (34), le traitement d'extraction de durée extrait la durée d'usinage la plus courte parmi les durées d'usinage associées à chacune de la pluralité d'informations d'usinage correspondantes.

6. Dispositif de commande numérique (30) selon la revendication 2, dans lequel
le deuxième traitement d'actionnement exécute de manière répétée l'actionnement du mécanisme de pulvérisation (22) pendant une première durée, puis l'arrêt du mécanisme de pulvérisation (22) pendant une deuxième durée suivant l'actionnement du mécanisme de pulvérisation (22) pendant la première durée, et
la première durée prédéterminée est plus courte que la première durée.

7. Dispositif de commande numérique (30) selon la revendication 2, dans lequel
le deuxième traitement d'actionnement exécute de manière répétée l'actionnement du mécanisme de pulvérisation (22) pendant une première durée, puis l'arrêt du mécanisme de pulvérisation (22) pendant une deuxième durée suivant l'actionnement du mécanisme de pulvérisation (22) pendant la première durée, et
la première durée prédéterminée est plus longue que la première durée.

8. Dispositif de commande numérique (30) selon la revendication 1, exécutant en outre un traitement comprenant :
un quatrième traitement d'actionnement, consistant, lorsqu'il est déterminé par le traitement de détermination d'informations que les informations d'usinage correspondantes ne sont pas stockées dans la portion de stockage (34), à actionner en continu le mécanisme de pulvérisation (22) pendant une période allant d'un début à la fin de l'opération d'usinage.

9. Dispositif de commande numérique (30) selon la revendication 2, dans lequel
le deuxième traitement d'actionnement exécute de manière répétée l'actionnement du mécanisme de pulvérisation (22) pendant une première durée, puis l'arrêt du mécanisme de pulvérisation (22) pendant une deuxième durée suivant l'actionnement du mécanisme de pulvérisation (22) pendant la première durée, et
le dispositif de commande numérique (30) exécute en outre des traitements comprenant :
un deuxième traitement de détermination consistant à déterminer si une deuxième durée prédéterminée est inférieure à une durée de référence prédéterminée, la deuxième durée étant une durée allant du dernier arrêt de l'actionnement du mécanisme de pulvérisation (22) avant la fin de l'opération d'usinage par le deuxième traitement d'actionnement jusqu'au moment spécifique ; et
un cinquième traitement d'actionnement consistant, lorsqu'il est déterminé par le deuxième traitement de détermination que la deuxième durée prédéterminée est inférieure à la durée de référence, à actionner en continu le mécanisme de pulvérisation (22) pendant une période allant du moment où commence, pour la dernière fois, l'actionnement du mécanisme de pulvérisation (22) pendant la première durée jusqu'à la fin de l'opération d'usinage.

10. Procédé de commande qui commande une machine-outil (1) équipée d'un mécanisme de pulvérisation (22) configuré pour pulvériser un fluide de coupe à l'intérieur d'un capot (4) de sorte à éliminer les copeaux générés pendant l'usinage, le procédé de commande exécutant des traitements comprenant :
un traitement de réception consistant à recevoir une opération afin de sélectionner un programme d'usinage de la machine-outil (1) ;
un traitement de définition des conditions consistant à définir des conditions d'usinage lorsque la machine-outil (1) est actionnée pour usiner une pièce (T) sur la base du programme d'usinage sélectionné lors de l'opération reçue par le traitement de réception ; et
un traitement de commande d'exécution d'usinage consistant à exécuter une opération d'usinage, l'opération d'usinage actionnant la machine-outil (1) et usinant la pièce (T) sur la base du programme d'usinage reçu lors du traitement de réception, dans les conditions d'usinage définies par le traitement de définition des conditions, dans lequel
le traitement de commande d'exécution d'usinage comprend
un traitement de mesure consistant à mesurer une durée d'usinage pendant laquelle l'opération d'usinage est exécutée,
un traitement de commande de stockage consistant à stocker des informations d'usinage de référence dans une portion de stockage (34) lorsque l'opération d'usinage est terminée, les informations d'usinage de référence étant des informations d'identification du programme d'usinage, en association avec les conditions d'usinage définies par le traitement de définition des conditions, ainsi que la durée d'usinage mesurée par le traitement de mesure,
un traitement de détermination d'informations consistant, dans un état où les informations d'usinage de référence sont stockées dans la portion de stockage (34) par le traitement de commande de stockage, lorsque l'opération consistant à sélectionner le programme d'usinage est reçue par le traitement de réception et que les conditions d'usinage sont définies par le traitement de définition des conditions, à déterminer si des informations d'usinage correspondantes sont stockées ou non dans la portion de stockage (34), les informations d'usinage correspondantes étant des informations d'usinage de référence dont les informations d'identification correspondent aux informations d'identification du programme d'usinage sélectionné et dont les conditions d'usinage correspondent aux conditions d'usinage définies,
un traitement d'extraction de durée consistant à extraire la durée d'usinage associée dans les informations d'usinage correspondantes, lorsqu'il est déterminé par le traitement de détermination d'informations que les informations d'usinage correspondantes sont stockées dans la portion de stockage (34),
un premier traitement de détermination consistant à déterminer, sur la base de la durée d'usinage extraite par le traitement d'extraction de durée, si un moment spécifique a été atteint, le moment spécifique étant la durée d'usinage extraite par le traitement d'extraction de durée, diminuée d'une première durée prédéterminée, et
un premier traitement d'actionnement consistant, lorsqu'il est déterminé par le premier traitement de détermination que le moment spécifique a été atteint, à actionner le mécanisme de pulvérisation (22) pendant une période allant du moment spécifique jusqu'à la fin de l'opération d'usinage.

11. Programme de commande qui amène un ordinateur, qui commande une machine-outil (1) équipée d'un mécanisme de pulvérisation (22) configuré pour pulvériser un fluide de coupe à l'intérieur d'un capot (4) de sorte à éliminer les copeaux générés pendant l'usinage, à exécuter des traitements comprenant :
un traitement de réception consistant à recevoir une opération afin de sélectionner un programme d'usinage de la machine-outil (1) ;
un traitement de définition des conditions consistant à définir des conditions d'usinage lorsque la machine-outil (1) est actionnée pour usiner une pièce (T) sur la base du programme d'usinage sélectionné lors de l'opération reçue par le traitement de réception ; et
un traitement de commande d'exécution d'usinage consistant à exécuter une opération d'usinage, l'opération d'usinage actionnant la machine-outil (1) et usinant la pièce (T) sur la base du programme d'usinage reçu lors du traitement de réception, dans les conditions d'usinage définies par le traitement de définition des conditions, dans lequel
le traitement de commande d'exécution d'usinage comprend
un traitement de mesure consistant à mesurer une durée d'usinage pendant laquelle l'opération d'usinage est exécutée,
un traitement de commande de stockage consistant à stocker des informations d'usinage de référence dans une portion de stockage (34) lorsque l'opération d'usinage est terminée, les informations d'usinage de référence étant des informations d'identification du programme d'usinage, en association avec les conditions d'usinage définies par le traitement de définition des conditions, ainsi que la durée d'usinage mesurée par le traitement de mesure,
un traitement de détermination d'informations consistant, dans un état où les informations d'usinage de référence sont stockées dans la portion de stockage (34) par le traitement de commande de stockage, lorsque l'opération consistant à sélectionner le programme d'usinage est reçue par le traitement de réception et que les conditions d'usinage sont définies par le traitement de définition des conditions, à déterminer si des informations d'usinage correspondantes sont stockées ou non dans la portion de stockage (34), les informations d'usinage correspondantes étant des informations d'usinage de référence dont les informations d'identification correspondent aux informations d'identification du programme d'usinage sélectionné et dont les conditions d'usinage correspondent aux conditions d'usinage définies,
un traitement d'extraction de durée consistant à extraire la durée d'usinage associée dans les informations d'usinage correspondantes, lorsqu'il est déterminé par le traitement de détermination d'informations que les informations d'usinage correspondantes sont stockées dans la portion de stockage (34),
un premier traitement de détermination consistant à déterminer, sur la base de la durée d'usinage extraite par le traitement d'extraction de durée, si un moment spécifique a été atteint, le moment spécifique étant la durée d'usinage extraite par le traitement d'extraction de durée, diminuée d'une première durée prédéterminée, et
un premier traitement d'actionnement consistant, lorsqu'il est déterminé par le premier traitement de détermination que le moment spécifique a été atteint, à actionner le mécanisme de pulvérisation (22) pendant une période allant du moment spécifique jusqu'à la fin de l'opération d'usinage.

12. Support de stockage contenant un programme de commande qui amène un ordinateur, qui commande une machine-outil (1) équipée d'un mécanisme de pulvérisation (22) configuré pour pulvériser un fluide de coupe à l'intérieur d'un capot (4) de sorte à éliminer les copeaux générés pendant l'usinage, à exécuter des traitements comprenant :
un traitement de réception consistant à recevoir une opération afin de sélectionner un programme d'usinage de la machine-outil (1) ;
un traitement de définition des conditions consistant à définir des conditions d'usinage lorsque la machine-outil (1) est actionnée pour usiner une pièce (T) sur la base du programme d'usinage sélectionné lors de l'opération reçue par le traitement de réception ; et
un traitement de commande d'exécution d'usinage consistant à exécuter une opération d'usinage, l'opération d'usinage actionnant la machine-outil (1) et usinant la pièce (T) sur la base du programme d'usinage reçu lors du traitement de réception, dans les conditions d'usinage définies par le traitement de définition des conditions, dans lequel
le traitement de commande d'exécution d'usinage comprend
un traitement de mesure consistant à mesurer une durée d'usinage pendant laquelle l'opération d'usinage est exécutée,
un traitement de commande de stockage consistant à stocker des informations d'usinage de référence dans une portion de stockage (34) lorsque l'opération d'usinage est terminée, les informations d'usinage de référence étant des informations d'identification du programme d'usinage, en association avec les conditions d'usinage définies par le traitement de définition des conditions, ainsi que la durée d'usinage mesurée par le traitement de mesure,
un traitement de détermination d'informations consistant, dans un état où les informations d'usinage de référence sont stockées dans la portion de stockage (34) par le traitement de commande de stockage, lorsque l'opération consistant à sélectionner le programme d'usinage est reçue par le traitement de réception et que les conditions d'usinage sont définies par le traitement de définition des conditions, à déterminer si des informations d'usinage correspondantes sont stockées ou non dans la portion de stockage (34), les informations d'usinage correspondantes étant des informations d'usinage de référence dont les informations d'identification correspondent aux informations d'identification du programme d'usinage sélectionné et dont les conditions d'usinage correspondent aux conditions d'usinage définies,
un traitement d'extraction de durée consistant à extraire la durée d'usinage associée dans les informations d'usinage correspondantes, lorsqu'il est déterminé par le traitement de détermination d'informations que les informations d'usinage correspondantes sont stockées dans la portion de stockage (34),
un premier traitement de détermination consistant à déterminer, sur la base de la durée d'usinage extraite par le traitement d'extraction de durée, si un moment spécifique a été atteint, le moment spécifique étant la durée d'usinage extraite par le traitement d'extraction de durée, diminuée d'une première durée prédéterminée, et
un premier traitement d'actionnement consistant, lorsqu'il est déterminé par le premier traitement de détermination que le moment spécifique a été atteint, à actionner le mécanisme de pulvérisation (22) pendant une période allant du moment spécifique jusqu'à la fin de l'opération d'usinage.
